(19) **Europäisches Patentamt / European Patent Office / Office européen des brevets**

(11) **EP 4 664 882 A1**

(12) # DEMANDE DE BREVET EUROPEEN

(43) Date de publication:
**17.12.2025 Bulletin 2025/51**

(21) Numéro de dépôt: **25174232.6**

(22) Date de dépôt: **20.06.2012**

(51) Classification Internationale des Brevets (IPC):
**H04N 19/13** (2014.01)  **H04N 19/174** (2014.01)
**H04N 19/176** (2014.01)  **H04N 19/196** (2014.01)
**H04N 19/436** (2014.01)

(52) Classification Coopérative des Brevets (CPC):
**H04N 19/13; H04N 19/174; H04N 19/176;
H04N 19/196; H04N 19/197; H04N 19/436**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2011 FR 1155606**

(62) Numéro(s) de document de la (des) demande(s) initiale(s) en application de l'article 76 CBE:
**20155879.8 / 3 700 207**
**12734974.4 / 2 724 536**

(71) Demandeur: **Dolby International AB
Dublin, D02 VK60 (IE)**

(72) Inventeurs:
• **HENRY, Felix**
  **35760 SAINT GREGOIRE (FR)**
• **PATEUX, Stéphane**
  **35700 Rennes (FR)**
• **CLARE, Gordon**
  **35740 F-PACE (FR)**

(74) Mandataire: **Fish & Richardson P.C.
Highlight Business Towers
Mies-van-der-Rohe-Straße 8
80807 München (DE)**

Remarques:
Revendications déposées après la date de réception de la demande divisionnaire (règle 68(4) CBE).

(54) **PROCÉDÉ ET DISPOSITIF DE CODAGE ET DÉCODAGE D'IMAGES**

(57) L'invention concerne un procédé de codage comprenant le découpage (C1) de l'image en une pluralité de blocs (MB) aptes à contenir des symboles appartenant à un ensemble prédéterminé de symboles, le regroupement (C2) de blocs en un nombre prédéterminé (P) de sous-ensembles de blocs (SE1, SE2,..., SEk,..., SEP), le codage (C3), au moyen d'un module de codage entropique, de chacun desdits sous-ensembles de blocs, par association d'informations numériques aux symboles de chaque bloc d'un sous-ensemble considéré, ladite étape de codage comprenant, pour le premier bloc de l'image, une sous-étape (C33) d'initialisation de variables d'état dudit module de codage entropique, puis la génération d'au moins un sous-flux de données représentatif d'au moins un desdits sous-ensembles de blocs codés. Dans le cas où le bloc courant est le premier bloc à coder d'un sous-ensemble de blocs considéré, les probabilités d'apparition de symbole pour ledit premier bloc courant sont celles qui ont été déterminées pour un bloc prédéterminé codé et décodé d'au moins un autre sous-ensemble. Dans le cas où le bloc courant est le dernier bloc codé du sous-ensemble considéré, il est procédé à l'écriture (C45), dans le sous-flux représentatif dudit au moins sous-ensemble considéré, de la totalité des informations numériques qui ont été associées aux symboles lors du codage des blocs dudit sous-ensemble considéré, et il est procédé à la mise en œuvre (C46) de la sous-étape d'initialisation.

Fig. 2B

## Description

Domaine de l'invention

La présente invention se rapporte de manière générale au domaine du traitement d'images, et plus précisément au codage et au décodage d'images numériques et de séquences d'images numériques.

L'invention peut ainsi, notamment, s'appliquer au codage vidéo mis en œuvre dans les codeurs vidéo actuels (MPEG, H.264, etc) ou à venir (ITU-T/VCEG (H.265) ou ISO/MPEG (HVC).

Arrière-plan de l'invention

Les codeurs vidéo actuels (MPEG, H264, ...) utilisent une représentation par blocs de la séquence vidéo. Les images sont découpées en macro-blocs, chaque macro-bloc est lui-même découpé en blocs et chaque bloc, ou macro-bloc, est codé par prédiction intra-images ou inter-images. Ainsi, certaines images sont codées par prédiction spatiale (prédiction intra), tandis que d'autres images sont codées par prédiction temporelle (prédiction inter) par rapport à une ou plusieurs images de référence codées-décodées, à l'aide d'une compensation en mouvement connue par l'homme de l'art. De plus, pour chaque bloc peut être codé un bloc résiduel correspondant au bloc original diminué d'une prédiction. Les coefficients de ce bloc sont quantifiés après une éventuelle transformation, puis codés par un codeur entropique.

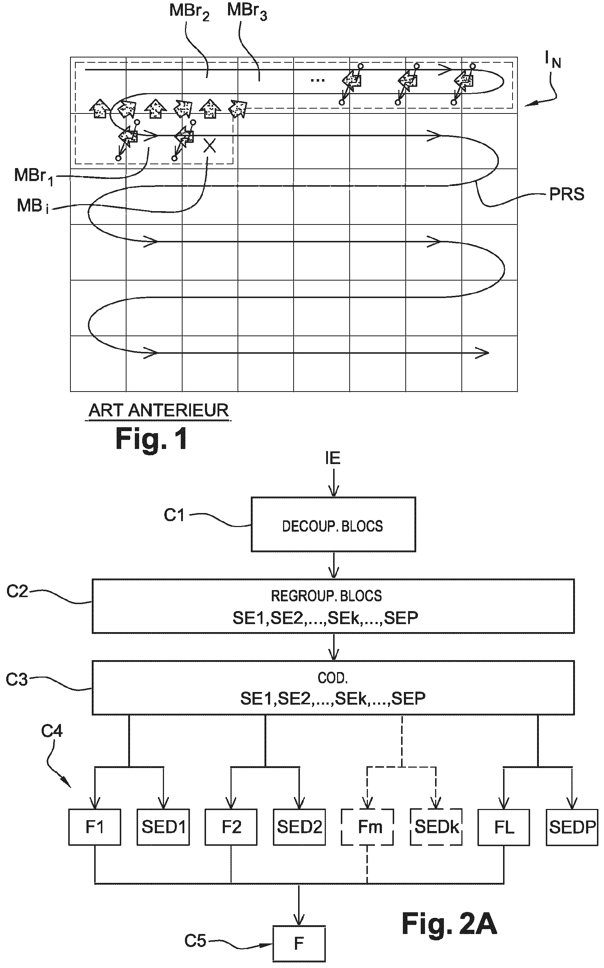

La prédiction intra et la prédiction inter nécessitent que certains blocs qui ont été précédemment codés et décodés soient disponibles, de façon à être utilisés, aussi bien au décodeur qu'au codeur, pour prédire le bloc courant. Un exemple schématique d'un tel codage prédictif est représenté à la **figure 1,** dans laquelle une image $I_N$ est divisée en blocs, un bloc courant $MB_i$ de cette image étant soumis à un codage prédictif par rapport à un nombre prédéterminé de trois blocs $MBr_1$, $MBr_2$ et $MBr_3$ précédemment codés et décodés, tels que désignés par les flèches grisées. Les trois blocs précités comprennent spécifiquement le bloc $MBr_1$ situé immédiatement à gauche du bloc courant $MB_i$, et les deux blocs $MBr_2$ et $MBr_3$ situés respectivement immédiatement au-dessus et à droite au-dessus du bloc courant $MB_i$.

On s'intéresse ici plus particulièrement au codeur entropique. Le codeur entropique encode les informations suivant leur ordre d'arrivée. Typiquement un parcours ligne par ligne des blocs est réalisé, de type « raster-scan », comme illustré sur la **figure 1** par la référence PRS, en partant du bloc en haut à gauche de l'image. Pour chaque bloc, les différentes informations nécessaires à la représentation du bloc (type de bloc, mode de prédiction, coefficients de résidu, ...) sont envoyées séquentiellement au codeur entropique.

On connaît déjà un codeur arithmétique efficace et de complexité raisonnable, appelé « CABAC » ("Context Adaptive Binary Arithmetic Coder" en anglais), introduit dans le standard de compression AVC (aussi connu sous le nom de ISO-MPEG4 partie 10 et ITU-T H.264).

Ce codeur entropique met en œuvre différents concepts :

- le codage arithmétique : le codeur, tel que décrit initialement dans le document J. Rissanen and G. G. Langdon Jr, "Universal modeling and coding," IEEE Trans. Inform. Theory, vol. IT-27, pp. 12-23, Jan. 1981, utilise, pour coder un symbole, une probabilité d'apparition de ce symbole ;

- l'adaptation au contexte : il s'agit ici d'adapter la probabilité d'apparition des symboles à coder. D'une part, un apprentissage à la volée est réalisé. D'autre part, suivant l'état des informations préalablement codées, un contexte spécifique est utilisé pour le codage. A chaque contexte correspond une probabilité d'apparition propre du symbole. Par exemple un contexte correspond à un type de symbole codé (la représentation d'un coefficient d'un résidu, signalisation de mode de codage, ...) suivant une configuration donnée, ou un état du voisinage (par exemple le nombre de modes « intra » sélectionnés dans le voisinage, ...) ;

- la binarisation : une mise sous la forme d'une suite de bits des symboles à coder est réalisée. Par la suite, ces différents bits sont envoyés successivement au codeur entropique binaire.

Ainsi, ce codeur entropique met en œuvre, pour chaque contexte utilisé, un système d'apprentissage des probabilités à la volée par rapport aux symboles précédemment codés pour le contexte considéré. Cet apprentissage est basé sur l'ordre de codage de ces symboles. Typiquement, l'image est parcourue selon un ordre de type « raster-scan », décrit ci-dessus.

Lors du codage d'un symbole *b* donné pouvant valoir 0 ou 1, l'apprentissage de la probabilité $p_i$ d'apparition de ce symbole est mis à jour pour un bloc courant $MB_i$ de la façon suivante:

$$p_i\left(b=0\right) = \alpha.p_{i-1}\left(b=0\right) + \begin{cases} (1-\alpha) & \text{si bit codé est 0} \\ 0 & \text{sinon} \end{cases}$$

où $\alpha$ est une valeur prédéterminée, par exemple 0.95 et $p_{i-1}$ est la probabilité d'apparition de symbole calculée lors de la dernière apparition de ce symbole.

Un exemple schématique d'un tel codage entropique est représenté à la **figure 1,** dans laquelle un bloc courant $MB_i$ de l'image $I_N$ est soumis à un codage entropique. Lorsque le codage entropique du bloc $MB_i$ commence, les probabilités d'apparition de symboles utilisées sont celles obtenues après codage d'un bloc précédemment codé et décodé, qui est celui qui précède immédiatement le bloc courant MB$_i$ conformément au parcours ligne par ligne des blocs de type « raster scan » précité. Un tel apprentissage basé sur la dépendance bloc à bloc est représenté sur la **figure 1** pour certains blocs seulement dans un souci de clarté de la figure, par les flèches en trait fin.

Un inconvénient d'un tel type de codage entropique réside dans le fait que lors du codage d'un symbole se situant en début d'une ligne, les probabilités utilisées correspondent principalement à celles observées pour les symboles se situant en fin de la ligne précédente, compte tenu du parcours « raster scan » des blocs. Or, du fait de la possible variation spatiale des probabilités des symboles (par exemple pour un symbole lié à une information de mouvement, le mouvement situé sur la partie droite d'une image peut être différent de celui observé sur la partie gauche et donc de même pour les probabilités locales en découlant), un manque d'adéquation locale des probabilités peut être observé, ce qui risque d'entraîner une perte en efficacité lors du codage.

Pour limiter ce phénomène, des propositions de modifications de l'ordre de parcours des blocs ont été faites, dans le but d'assurer une meilleure cohérence locale, mais le codage et le décodage restent séquentiels.

C'est là un autre inconvénient de ce type de codeur entropique. En effet, le codage et le décodage d'un symbole étant dépendants de l'état de la probabilité apprise jusque-là, le décodage des symboles ne peut se faire que dans le même ordre que celui utilisé lors du codage. Typiquement, le décodage ne peut alors être que séquentiel, empêchant ainsi un décodage en parallèle de plusieurs symboles (par exemple pour profiter des architectures multi-cœur).

Le document: Thomas Wiegand, Gary J. Sullivan, Gisle Bjontegaard, and Ajay Luthra, "Overview of the H.264/AVC Video Coding Standard", IEEE Transactions on Circuits and Systems for Video Technology, Vol. 13, No. 7, pp. 560-576, July 2003, précise par ailleurs que le codeur entropique CABAC a pour particularité d'affecter un nombre non entier de bits à chaque symbole d'un alphabet courant à coder, ce qui est avantageux pour les probabilités d'apparition de symboles supérieure à 0,5. Concrètement, le codeur CABAC attend d'avoir lu plusieurs symboles, puis affecte à cet ensemble de symboles lus un nombre prédéterminé de bits que le codeur inscrit dans le flux compressé à transmettre au décodeur. Une telle disposition permet ainsi de « mutualiser » les bits sur plusieurs symboles et de coder un symbole sur un nombre fractionnaire de bits, ce nombre reflétant une information qui est plus proche de l'information réellement transportée par un symbole. D'autres bits associés aux symboles lus ne sont pas transmis dans le flux compressé mais sont conservés dans l'attente d'être affectés à un ou plusieurs nouveaux symboles lus par le codeur CABAC permettant à nouveau de mutualiser ces autres bits. De façon connue en tant que telle, le codeur entropique procède, à un instant donné, à une « vidange » de ces bits non transmis. Autrement dit, audit instant donné, le codeur extrait les bits non encore transmis et les inscrit dans le flux compressé à destination du décodeur. Une telle vidange se produit par exemple à l'instant où le dernier symbole à coder a été lu, de façon à assurer que le flux compressé contienne bien tous les bits qui permettront au décodeur de décoder tous les symboles de l'alphabet. De façon plus générale, l'instant auquel est effectuée la vidange est déterminé en fonction des performances et des fonctionnalités propres à un codeur/décodeur donné.

Le document, qui est disponible à l'adresse Internet http://research.microsoft.com/en-us/um/people/jinl/paper_2002/msri_jpeg.htm à la date du 15 avril 2011, décrit un procédé de codage d'images fixes conforme au standard de compression JPEG2000. Selon ce procédé, les données d'image fixe subissent une transformée en ondelettes discrète suivie d'une quantification, ce qui permet d'obtenir des coefficients d'ondelettes quantifiés auxquels sont associés respectivement des index de quantification. Les index de quantification obtenus sont codés à l'aide d'un codeur entropique. Les coefficients quantifiés sont préalablement groupés en bloc rectangulaires appelés code-blocks, typiquement de taille 64x64 ou 32x32. Chaque code-block est ensuite codé indépendamment par codage entropique. Ainsi, le codeur entropique, lorsqu'il procède au codage d'un code-block courant, n'utilise pas les probabilités d'apparition de symboles calculées lors du codage de code-blocks précédents. Le codeur entropique se trouve donc dans un état initialisé à chaque début de codage d'un code-block. Un tel procédé présente l'avantage de décoder les données d'un code-block sans avoir à décoder les code-blocks voisins. Ainsi par exemple, un logiciel client peut requérir auprès d'un logiciel serveur la fourniture des code-blocks compressés dont le client a uniquement besoin pour décoder une sous-partie identifiée d'une image. Un tel procédé présente également l'avantage d'autoriser l'encodage et/ou le décodage en parallèle des code-blocks. Ainsi, plus les code-blocks sont de petite taille, plus le niveau de parallélisme est élevé. Par exemple, pour un niveau de parallélisme fixé à deux, deux code-blocks seront codés et/ou décodés en parallèle. En théorie, la valeur du niveau de parallélisme est égale au nombre de code-blocks à coder de l'image. Toutefois, les performances de compression obtenues avec ce procédé ne sont pas optimales compte tenu du fait qu'un tel codage ne tire pas partie des probabilités issues de l'environnement immédiat du code-block courant.

Objet et résumé de l'invention

Un des buts de l'invention est de remédier à des inconvénients de l'état de la technique précité.

A cet effet, un objet de la présente invention concerne un procédé de codage d'au moins une image comprenant les étapes de :

- découpage de l'image en une pluralité de blocs aptes à contenir des symboles appartenant à un ensemble prédéterminé de symboles,
- regroupement de blocs en un nombre prédéterminé de sous-ensembles de blocs,
- codage, au moyen d'un module de codage entropique, de chacun des sous-ensembles de blocs, par association d'informations numériques aux symboles de chaque bloc d'un sous-ensemble considéré, l'étape de codage comprenant, pour le premier bloc de l'image, une sous-étape d'initialisation de variables d'état du module de codage entropique,
- génération d'au moins un sous-flux de données représentatif d'au moins un des sous-ensembles de blocs codés.

Le procédé selon l'invention est remarquable en ce que :

- dans le cas où le bloc courant est le premier bloc à coder d'un sous-ensemble considéré, il est procédé à la détermination de probabilités d'apparition de symbole pour le premier bloc courant, les probabilités étant celles qui ont été déterminées pour un bloc prédéterminé codé et décodé d'au moins un autre sous-ensemble,
- dans le cas où le bloc courant est le dernier bloc codé du sous-ensemble considéré il est procédé à :

  • l'écriture, dans le sous-flux représentatif du sous-ensemble considéré, de la totalité des informations numériques qui ont été associées aux symboles lors du codage des blocs du sous-ensemble considéré,
  • la mise en œuvre de la sous-étape d'initialisation.

L'étape d'écriture mentionnée ci-dessus revient à effectuer, dès que le dernier bloc d'un sous-ensemble de blocs a été codé, une vidange des informations numériques (bits) non encore transmises, comme cela a été expliqué plus haut dans la description.

Le couplage de l'étape d'écriture précitée et de l'étape de réinitialisation du module de codage entropique permet de produire un flux de données codé contenant différents sous-flux de données correspondant respectivement à au moins un sous-ensemble de blocs codé, ledit flux étant adapté à être décodé en parallèle selon différents niveaux de parallélisme, et cela indépendamment du type de codage, séquentiel ou parallèle, qui a été appliqué aux sous-ensembles de blocs. Ainsi, un grand degré de liberté peut être obtenu au décodage sur le choix du niveau de parallélisme, en fonction des performances de codage/décodage attendues. Le niveau de parallélisme au décodage est variable et peut même être différent du niveau de parallélisme au codage, puisque au démarrage du décodage d'un sous-ensemble de blocs, le décodeur est toujours dans un état initialisé.

Selon un premier exemple, les variables d'état du module de codage entropique sont les deux bornes d'un intervalle représentatif de la probabilité d'apparition d'un symbole parmi les symboles de l'ensemble prédéterminé de symboles.

Selon un deuxième exemple, les variables d'état du module de codage entropique sont les chaines de symboles contenues dans la table de traduction d'un codeur entropique LZW (Lempel-Ziv-Welch) bien connu de l'homme de l'art, et décrit à l'adresse internet suivante à la date du 21 juin 2011 : http://en.wikipedia.org/wiki/Lempel%E2%80%93Ziv%E2%80%93Welch.

L'utilisation des probabilités d'apparition de symbole déterminées pour le premier bloc dudit autre sous-ensemble lors du codage entropique du premier bloc courant d'un sous-ensemble de blocs considéré a principalement pour avantage d'économiser la mémoire tampon du codeur en stockant dans cette dernière uniquement la mise à jour desdites probabilités d'apparition de symboles, sans prendre en compte les probabilités d'apparition de symboles apprises par les autres blocs consécutifs dudit autre sous-ensemble.

L'utilisation des probabilités d'apparition de symbole déterminées pour un bloc dudit autre sous-ensemble, autre que le premier bloc, par exemple le deuxième bloc, lors du codage entropique du premier bloc courant d'un sous-ensemble de blocs considéré a principalement pour avantage l'obtention d'un apprentissage plus précis et donc meilleur des probabilités d'apparition de symboles, ce qui entraîne de meilleures performances de compression vidéo.

Dans un mode de réalisation particulier, les sous-ensembles de blocs sont codés séquentiellement ou bien en parallèle.

Le fait que les sous-ensembles de blocs soient codés séquentiellement a pour avantage de rendre le procédé de codage selon l'invention conforme à la norme H.264/MPEG-4 AVC.

Le fait que les sous-ensembles de blocs soient codés en parallèle a pour avantage d'accélérer le temps de traitement du codeur et de bénéficier d'une architecture multiplateforme pour le codage d'une image.

Dans un autre mode de réalisation particulier, lorsqu'au moins deux sous-ensembles de blocs sont codés parallèlement à au moins un autre sous-ensemble de blocs, les au moins deux sous-ensembles de blocs codés sont contenus dans le même sous-flux de données.

Une telle disposition permet en particulier d'économiser sur la signalisation des sous-flux de données. En effet, pour qu'une unité de décodage puisse décoder le plus tôt possible un sous-flux, il est nécessaire d'indiquer dans le fichier compressé à quel endroit commence le sous-flux en question. Lorsque plusieurs sous-ensembles de blocs sont contenus dans le même sous-flux de données, un seul indicateur est nécessaire, ce qui réduit la taille du fichier compressé.

Dans encore un autre mode de réalisation particulier, lorsque les sous-ensembles de blocs codés sont destinés à être décodés en parallèle selon un ordre prédéterminé, les sous-flux de données délivrés après codage respectivement de chacun des sous-ensembles de blocs sont préalablement ordonnés selon l'ordre prédéterminé avant d'être transmis en vue de leur décodage.

Une telle disposition permet d'adapter le flux de données codé à un type de décodage spécifique sans avoir besoin de décoder puis de ré-encoder l'image.

Corrélativement, l'invention concerne encore un dispositif de codage d'au moins une image comprenant :

- des moyens de découpage de l'image en une pluralité de blocs aptes à contenir des symboles appartenant à un ensemble prédéterminé de symboles,
- des moyens de regroupement des blocs en un nombre prédéterminé de sous-ensembles de blocs,
- des moyens de codage de chacun des sous-ensembles de blocs, les moyens de codage comprenant un module de codage entropique apte à associer des informations numériques aux symboles de chaque bloc d'un sous-ensemble considéré, les moyens de codage comprenant, pour le premier bloc de l'image, des sous-moyens d'initialisation de variables d'état du module de codage entropique,
- des moyens de génération d'au moins un sous-flux de données représentatif d'au moins un des sous-ensembles de blocs codés.

Un tel dispositif de codage est remarquable en ce qu'il comprend :

- des moyens de détermination de probabilités d'apparition de symbole pour un bloc courant qui, dans le cas où le bloc courant est le premier bloc à coder d'un sous-ensemble considéré, déterminent les probabilités d'apparition de symbole pour le premier bloc comme étant celles qui ont été déterminées pour un bloc prédéterminé codé et décodé d'au moins un autre sous-ensemble,
- des moyens d'écriture qui, dans le cas où le bloc courant est le dernier bloc codé du sous-ensemble considéré, sont activés pour écrire, dans le sous-flux représentatif du sous-ensemble considéré, la totalité des informations numériques qui ont été associées aux symboles lors du codage des blocs du sous-ensemble considéré,

les sous-moyens d'initialisation étant en outre activés pour réinitialiser les variables d'état du module de codage entropique.

De façon correspondante, l'invention concerne aussi un procédé de décodage d'un flux représentatif d'au moins une image codée, comprenant les étapes de :

- identification dans le flux d'un nombre prédéterminé de sous-flux de données correspondant respectivement à au moins un sous-ensemble de blocs à décoder, les blocs étant aptes à contenir des symboles appartenant à un ensemble prédéterminé de symboles,
- décodage des sous-ensembles de blocs identifiés au moyen d'un module de décodage entropique, par lecture, dans au moins un des sous-flux identifiés, d'informations numériques associées aux symboles de chaque bloc du sous-ensemble correspondant audit au moins un sous-flux identifié, l'étape de décodage comprenant, pour le premier bloc à décoder de l'image, une sous-étape d'initialisation de variables d'état du module de décodage entropique.

Un tel procédé de décodage est remarquable en ce que :

- dans le cas où le bloc courant est le premier bloc à décoder d'un sous-ensemble considéré, il est procédé à la détermination de probabilités d'apparition de symbole pour le premier bloc du sous-ensemble considéré, les probabilités étant celles qui ont été déterminées pour un bloc prédéterminé décodé d'au moins un autre sous-ensemble,
- dans le cas où le bloc courant est le dernier bloc décodé du sous-ensemble considéré, il est procédé à la mise en œuvre de la sous-étape d'initialisation.

Dans un mode de réalisation particulier, les sous-ensembles de blocs sont décodés séquentiellement ou bien en parallèle.

Dans un autre mode de réalisation particulier, lorsqu'au moins deux sous-ensembles de blocs sont décodés parallèlement à au moins un autre sous-ensemble de blocs, un des sous-flux de données identifiés est représentatif des au moins deux sous-ensembles de blocs.

Dans encore un autre mode de réalisation particulier, lorsque les sous-ensembles de blocs codés sont destinés à être décodés en parallèle selon un ordre prédéterminé, les sous-flux de données correspondant respectivement aux sous-ensembles de blocs codés sont ordonnés préalablement selon ledit ordre prédéterminé dans ledit flux à décoder.

Corrélativement, l'invention concerne encore un dispositif de décodage d'un flux représentatif d'au moins une image codée, comprenant :

- des moyens d'identification dans le flux d'un nombre prédéterminé de sous-flux de données correspondant respectivement à au moins un sous-ensemble de blocs à décoder, les blocs étant aptes à contenir des symboles appartenant à un ensemble prédéterminé de symboles,
- des moyens de décodage des sous-ensembles de blocs identifiés, les moyens de décodage comprenant un module de décodage entropique apte à lire, dans au moins un des sous-flux identifiés, des informations numériques associées aux symboles de chaque bloc du sous-ensemble correspondant audit au moins un sous-flux identifié, les moyens de décodage comprenant, pour le premier bloc à décoder de l'image, des sous-moyens d'initialisation de variables d'état du module de décodage entropique.

Un tel dispositif de décodage est remarquable en ce qu'il comprend des moyens de détermination de probabilités d'apparition de symbole pour un bloc courant qui, dans le cas où le bloc courant est le premier bloc à décoder d'un sous-ensemble considéré, déterminent les probabilités d'apparition de symbole pour le premier bloc comme étant celles qui ont été déterminées pour un bloc prédéterminé décodé d'au moins un autre sous-ensemble,
et en ce que dans le cas où le bloc courant est le dernier bloc décodé du sous-ensemble considéré, les sous-moyens d'initialisation sont activés pour réinitialiser les variables d'état du module de décodage entropique.

L'invention vise également un programme d'ordinateur comportant des instructions pour l'exécution des étapes du procédé de codage ou de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif de codage, le procédé de décodage, le dispositif de décodage et les programmes d'ordinateur précités présentent au moins les mêmes avantages que ceux conférés par le procédé de codage selon la présente invention.

Brève description des dessins

D'autres caractéristiques et avantages apparaîtront à la lecture de deux modes de réalisation préférés décrits en référence aux figures dans lesquelles:

- la figure 1 représente un schéma de codage d'image de l'art antérieur,
- la figure 2A représente les principales étapes du procédé de codage selon l'invention,
- la figure 2B représente en détail le codage mis en œuvre dans le procédé de codage de la figure 2A,
- la figure 3A représente un premier mode de réalisation d'un dispositif de codage selon l'invention,
- la figure 3B représente une unité de codage du dispositif de codage de la figure 3A,
- la figure 3C représente un second mode de réalisation d'un dispositif de codage selon l'invention,
- la figure 4A représente un schéma de codage/décodage d'image selon un premier mode de réalisation préférentiel,
- la figure 4B représente un schéma de codage/décodage d'image selon un deuxième mode de réalisation préférentiel,
- la figure 5A représente les principales étapes du procédé de décodage selon l'invention,
- la figure 5B représente en détail le décodage mis en œuvre dans le procédé de décodage de la figure 5A,
- la figure 6A représente un mode de réalisation d'un dispositif de décodage selon l'invention,
- la figure 6B représente une unité de décodage du dispositif de décodage de la figure 6A,
- la figure 7A représente un schéma de codage/décodage d'image mettant en œuvre un codage de type séquentiel et un décodage de type parallèle,
- la figure 7B représente un schéma de codage/décodage d'image mettant en œuvre un codage/décodage de type parallèle, avec respectivement des niveaux de parallélisme différents.

Description détaillée d'un premier mode de réalisation de la partie codage

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C5, représentées à la **figure 2A.**

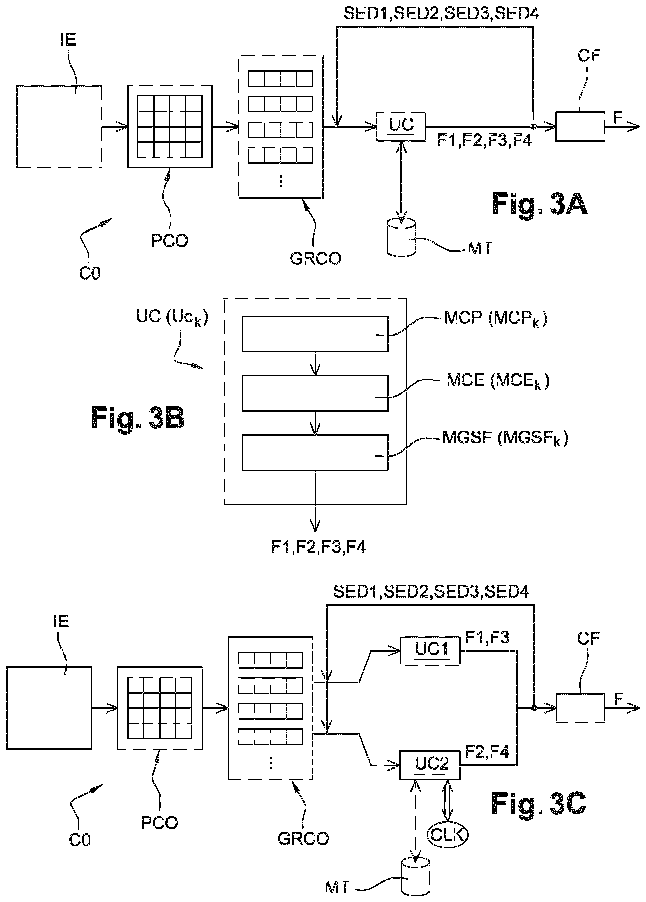

Selon le mode de réalisation de l'invention, le procédé de codage selon l'invention est implémenté dans un dispositif de codage CO dont deux modes de réalisation sont représentés respectivement sur les **figures 3A** et **3C**.

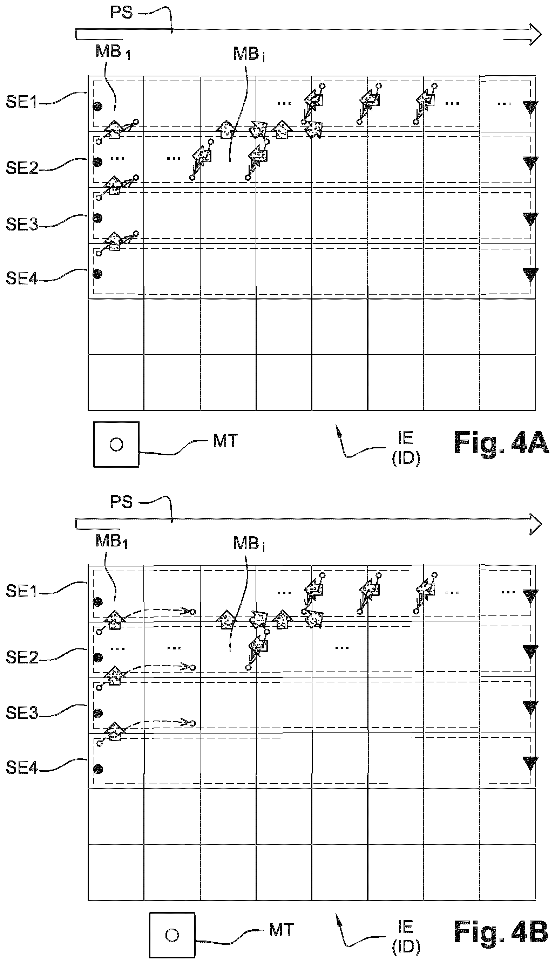

En référence à la **figure 2A,** la première étape de codage C1 est le découpage d'une image IE d'une séquence d'images à coder en une pluralité de blocs ou macro-blocs MB, comme représenté sur la **figure 4A** ou **4B**. Lesdits macro-blocs sont aptes à contenir un ou plusieurs symboles, lesdits symboles faisant partie d'un ensemble prédéterminé de symboles. Dans les exemples représentés, lesdits blocs MB ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module PCO de partitionnement représenté à la **figure 3A** qui utilise par exemple un algorithme de partitionnement bien connu en tant que tel.

En référence à la **figure 2A,** la deuxième étape de codage C2 est le regroupement des blocs précités en un nombre prédéterminé P de sous-ensembles de blocs consécutifs SE1, SE2,.., SEk,...,SEP destinés à être codés séquentiellement ou en parallèle. Dans les exemples représentés sur les **figures 4A et 4B,** P=6, mais seuls quatre sous-ensembles SE1, SE2, SE3, SE4, sont représentés dans un souci de clarté des figures. Ces quatre sous-ensembles de blocs sont chacun représentés en trait pointillé et sont constitués respectivement par les quatre premières lignes de blocs de l'image IE.

Un tel regroupement est effectué par un module de calcul GRCO représenté à la **figure 3A,** à l'aide d'un algorithme bien connu en soi.

En référence à la **figure 2A,** la troisième étape de codage C3 consiste dans le codage de chacun desdits sous-ensembles de blocs SE1 à SE6, les blocs d'un sous-ensemble considéré étant codés selon un ordre de parcours PS prédéterminé, qui est par exemple de type séquentiel. Dans les exemples représentés sur les **figures 4A et 4B,** les blocs d'un sous-ensemble SEk courant ($1 \le k \le P$) sont codés les uns après les autres, de la gauche vers la droite, comme indiqué par la flèche PS.

Selon une première variante, un tel codage est du type séquentiel et est mis en œuvre par une seule unité de codage UC tel que représentée sur la **figure 3A.** De façon connue en tant que telle, le codeur CO comprend une mémoire tampon MT qui est adaptée pour contenir les probabilités d'apparition de symboles telles que progressivement remises à jour au fur et à mesure du codage d'un bloc courant.

Comme représenté plus en détail sur la **figure 3B,** l'unité de codage UC comprend :

- un module de codage prédictif d'un bloc courant par rapport à au moins un bloc précédemment codé et décodé, notée MCP;
- un module de codage entropique dudit bloc courant par utilisation d'au moins une probabilité d'apparition de symbole calculée pour ledit bloc précédemment codé et décodé, notée MCE.

Le module de codage prédictif MCP est un module logiciel qui est apte à effectuer un codage prédictif du bloc courant, selon les techniques de prédiction classiques, telles que par exemple en mode Intra et/ou Inter.

Le module de codage entropique MCE est quant à lui de type CABAC, mais modifié selon la présente invention comme cela sera décrit plus loin dans la description.

En variante, le module de codage entropique MCE pourrait être un codeur de Huffman connu en tant que tel.

Dans les exemples représentés sur les **figures 4A et 4B,** l'unité UC code les blocs de la première ligne SE1, de gauche à droite. Lorsqu'elle parvient au dernier bloc de la première ligne SE1, elle passe au premier bloc de la deuxième ligne SE2. Lorsqu'elle parvient au dernier bloc de la deuxième ligne SE2, elle passe au premier bloc de la troisième ligne SE3. Lorsqu'elle parvient au dernier bloc de la troisième ligne SE3, elle passe au premier bloc de la quatrième ligne SE4, et ainsi de suite jusqu'à ce que le dernier bloc de l'image IE soit codé.

D'autres types de parcours que celui qui vient d'être décrit ci-dessus sont bien sûr possibles. Ainsi, il est possible de découper l'image IE en plusieurs sous-images et d'appliquer indépendamment un découpage de ce type sur chaque sous-image. Il est également possible pour l'unité de codage de traiter non pas une succession de lignes, comme expliqué ci-dessus, mais une succession de colonnes. Il est également possible de parcourir les lignes ou colonnes dans un sens ou dans l'autre.

Selon une seconde variante, un tel codage est du type parallèle et se distingue de la première variante de codage séquentiel, uniquement par le fait qu'il est mis en œuvre par un nombre R prédéterminé d'unités de codage UCk ($1 \le k \le R$), avec R=2 dans l'exemple représenté sur la **figure 3C.** Un tel codage parallèle est connu pour engendrer une accélération substantielle du procédé de codage.

Chacune des unités de codage UCk est identique à l'unité de codage UC représentée à la **figure 3B.** De façon correspondante, une unité de codage UCk comprend un module de codage prédictif MCPk et un module de codage entropique MCEk.

En référence à nouveau aux **figures 4A et 4B,** la première unité UC1 code par exemple les blocs des lignes de rang impair, tandis que la deuxième unité UC2 code par exemple les blocs des lignes de rang pair. Plus précisément, la première unité UC1 code les blocs de la première ligne SE1, de gauche à droite. Lorsqu'elle parvient au dernier bloc de la première ligne SE1, elle passe au premier bloc de la $(2n+1)^{\text{ème}}$ ligne, c'est-à-dire la troisième ligne SE3, etc. Parallèlement au traitement effectué par la première unité UC1, la deuxième unité UC2 code les blocs de la deuxième ligne SE2, de gauche à droite. Lorsqu'elle parvient au dernier bloc de la deuxième ligne SE2, elle passe au premier bloc de la $(2n)^{\text{ème}}$ ligne, ici la quatrième ligne SE4, etc. Les deux parcours précités se répètent jusqu'à ce que le dernier bloc de l'image IE soit codé.

En référence à la **figure 2A,** la quatrième étape de codage C4 est la production de L sous-flux F1, F2,..., Fm,..., FL ($1 \leq m \leq L \leq P$) de bits représentant les blocs traités compressés par l'unité de codage UC précitée ou chacune des unités de codage UCk précitées, ainsi qu'une version décodée des blocs traités de chaque sous-ensemble SEk. Les blocs traités décodés d'un sous-ensemble considéré, notés SED1, SED2,..., SEDk,..., SEDP sont susceptibles d'être réutilisés par l'unité de codage UC représentée sur la **figure 3A** ou chacune des unités de codage UCk représentées sur la **figure 3C,** selon un mécanisme de synchronisation qui sera détaillé plus loin dans la description.

En référence à la **figure 3B,** l'étape de production de L sous-flux est mise en œuvre par un module logiciel MGSF ou MGSFk de génération de flux qui est adapté à produire des flux de données, telles que des bits par exemple.

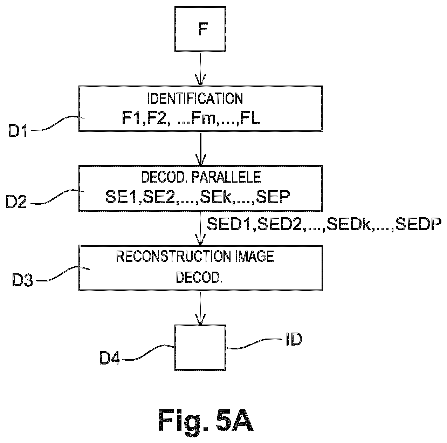

En référence à la **figure 2A,** la cinquième étape de codage C5 consiste à construire un flux global F à partir des L sous-flux F1, F2,..., Fm,..., FL précités. Selon un mode de réalisation, les sous-flux F1, F2,..., Fm,..., FL sont simplement juxtaposés, avec une information additionnelle destinée à indiquer au décodeur l'emplacement de chaque sous-flux Fm dans le flux global F. Ce dernier est ensuite transmis par un réseau de communication (non représenté), à un terminal distant. Celui-ci comporte le décodeur DO représenté à la **figure 5A.** Selon un autre mode de réalisation particulièrement avantageux car ne nécessitant pas un décodage puis un réencodage de l'image, le codeur CO, avant de transmettre le flux F au décodeur DO, ordonne préalablement les L sous-flux F1, F2,..., Fm,..., FL selon un ordre prédéterminé qui correspond à l'ordre dans lequel le décodeur DO est apte à décoder les sous-flux.

Ainsi, comme cela sera décrit en détail plus loin dans la description, le décodeur selon l'invention est en mesure d'isoler les sous-flux F1, F2,..., Fm,..., FL au sein du flux global F et de les affecter à une ou plusieurs unités de décodage composant le décodeur. On notera qu'une telle décomposition des sous-flux en flux global est indépendante du choix de l'utilisation d'une seule unité de codage ou bien de plusieurs unités de codage fonctionnant en parallèle, et qu'il est possible avec cette approche d'avoir uniquement le codeur ou uniquement le décodeur qui comporte des unités fonctionnant en parallèle.

Une telle construction du flux global F est mise en œuvre dans un module CF de construction de flux, tel que représenté sur la **figure 3A** et la **figure 3C.**

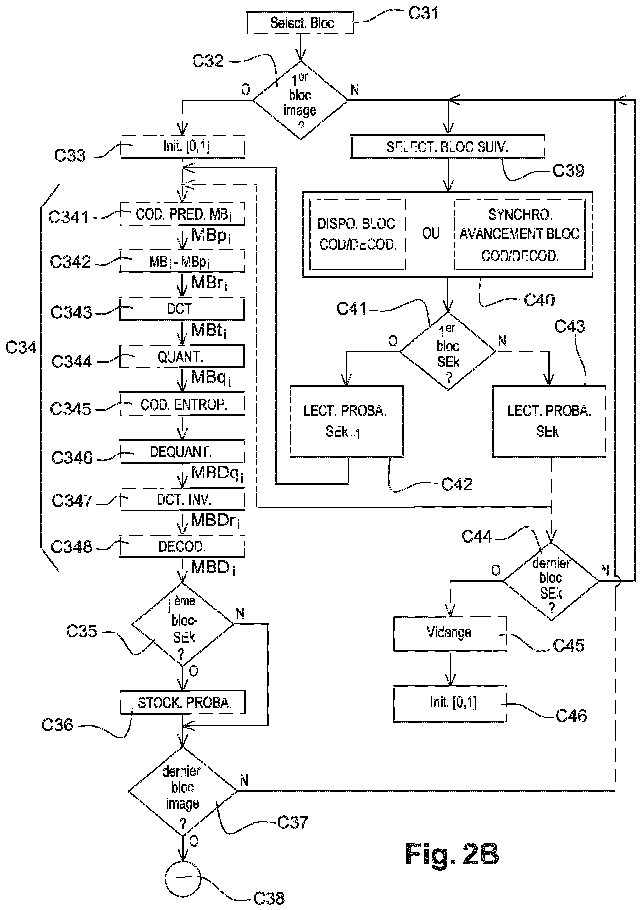

On va maintenant décrire, en référence à la **figure 2B,** les différentes sous-étapes spécifiques de l'invention, telles que mises en œuvre lors de l'étape C3 de codage précitée, dans une unité de codage UC ou UCk.

Au cours d'une étape C31, l'unité de codage UC ou UCk sélectionne comme bloc courant le premier bloc à coder d'une ligne SEk courante représentée à la **figure 4A ou 4B,** telle que par exemple la première ligne SE1.

Au cours d'une étape C32, l'unité UC ou UCk teste si le bloc courant est le premier bloc (situé en haut et à gauche) de l'image IE qui a été découpée en blocs à l'étape C1 précitée.

Si tel est le cas, au cours d'une étape C33, le module de codage entropique MCE ou MCEk procède à une initialisation de ses variables d'état. Selon l'exemple représenté, qui utilise le codage arithmétique décrit précédemment, il s'agit d'une initialisation d'un intervalle représentatif de la probabilité d'apparition d'un symbole contenu dans l'ensemble prédéterminé de symboles. De façon connue en tant que telle, cet intervalle est initialisé avec deux bornes L et H, respectivement inférieure et supérieure. La valeur de la borne inférieure L est fixée à 0, tandis que la valeur de la borne supérieure est fixée à 1, ce qui correspond à la probabilité d'apparition d'un premier symbole parmi tous les symboles de l'ensemble prédéterminé de symboles. La taille R de cet intervalle est donc définie à ce stade par R=H - L=1. L'intervalle initialisé est en outre partitionné classiquement en une pluralité de sous intervalles prédéterminés qui sont représentatifs respectivement des probabilités d'apparition des symboles de l'ensemble prédéterminé de symboles.

En variante, si le codage entropique utilisé est le codage LZW, une table de traduction de chaînes de symboles est initialisée, de sorte qu'elle contienne une et une seule fois tous les symboles possibles.

Si à la suite de l'étape C32 précitée, le bloc courant n'est pas le premier bloc de l'image IE, il est procédé, au cours d'une étape C40 qui sera décrite ultérieurement dans la suite de la description, à la détermination de la disponibilité des blocs précédemment codés et décodés nécessaires.

Au cours d'une étape C34, il est procédé au codage du premier bloc courant MB1 de la première ligne SE1 représentée sur la **figure 4A** ou **4B.** Une telle étape C34 comprend une pluralité de sous-étapes C341 à C348 qui vont être décrites ci-dessous.

Au cours d'une première sous-étape C341 représentée à la figure 2B, il est procédé au codage prédictif du bloc courant MB1 par des techniques connues de prédiction intra et/ou inter, au cours duquel le bloc MB1 est prédit par rapport à au moins un bloc précédemment codé et décodé.

Il va de soi que d'autres modes de prédiction intra tels que proposés dans la norme H.264 sont possibles.

Le bloc courant MB1 peut être également soumis à un codage prédictif en mode inter, au cours duquel le bloc courant est prédit par rapport à un bloc issu d'une image précédemment codée et décodée. D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit $MBp_1$ qui est une approximation du bloc courant $MB_1$. Les informations relatives à ce codage prédictif seront ultérieurement inscrites dans le flux F transmis au décodeur DO. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO.

Au cours d'une sous-étape suivante C342, il est procédé à la soustraction du bloc prédit $MBp_1$ du bloc courant $MB_1$ pour produire un bloc résidu $MBr_1$.

Au cours d'une sous-étape suivante C343, il est procédé à la transformation du bloc résidu MBr, selon une opération classique de transformation directe telle que par exemple une transformation en cosinus discrètes de type DCT, pour produire un bloc transformé $MBt_1$.

Au cours d'une sous-étape suivante C344, il est procédé à la quantification du bloc transformé $MBt_1$ selon une opération classique de quantification, telle que par exemple une quantification scalaire. Un bloc de coefficients quantifiés $MBq_1$ est alors obtenu.

Au cours d'une sous-étape suivante C345, il est procédé au codage entropique du bloc de coefficients quantifiés $MBq_1$. Dans le mode préféré de réalisation, il s'agit d'un codage entropique CABAC. Une telle étape consiste à :

a) lire le ou les symboles de l'ensemble prédéterminé de symboles qui sont associés audit bloc courant,
b) associer des informations numériques, telles que des bits, au(x) symbole(s) lu(s).

Dans la variante précitée selon laquelle le codage utilisé est un codage LZW, une information numérique correspondant au code du symbole dans la table de traduction courante est associée au symbole à coder, et une mise à jour de la table de traduction est effectuée, selon une méthode connue en soi.

Au cours d'une sous-étape suivante C346, il est procédé à la déquantification du bloc $MBq_1$ selon une opération classique de déquantification, qui est l'opération inverse de la quantification effectuée à l'étape C344.

Un bloc de coefficients déquantifiés $MBDq_1$ est alors obtenu.

Au cours d'une sous-étape suivante C347, il est procédé à la transformation inverse du bloc de coefficients déquantifiés $MBDq_1$ qui est l'opération inverse de la transformation directe effectuée à l'étape C343 ci-dessus. Un bloc résidu décodé $MBDr_1$ est alors obtenu.

Au cours d'une sous-étape suivante C348, il est procédé à la construction du bloc décodé MBD, en ajoutant ou bloc prédit $MBp_1$ le bloc résidu décodé $MBDr_1$. Il est à noter que ce dernier bloc est le même que le bloc décodé obtenu à l'issue du procédé de décodage de l'image IE qui sera décrit plus loin dans la description. Le bloc décodé $MBD_1$ est ainsi rendu disponible pour être utilisé par l'unité de codage UCk ou toute autre unité de codage faisant partie du nombre prédéterminé R d'unités de codage.

A l'issue de l'étape de codage C34 précitée, le module de codage entropique MCE ou MCEk tel que représenté à la **figure 3B** contient toutes les probabilités telles que progressivement remises à jour au fur et à mesure du codage du premier bloc. Ces probabilités correspondent aux différents éléments de syntaxes possibles et aux différents contextes de codage associés.

A la suite de l'étape de codage C34 précitée, il est testé, au cours d'une étape C35, si le bloc courant est le jème bloc de cette même ligne, où j est une valeur prédéterminée connue du codeur CO qui est au moins égale à 1.

Si tel est le cas, au cours d'une étape C36 représentée à la figure 2B, l'ensemble des probabilités calculé pour le jème bloc est stocké dans la mémoire tampon MT du codeur CO telle que représentée à la **figure 3A ou 3B** et aux **figures 4A et 4B,** la taille de ladite mémoire étant adaptée à stocker le nombre de probabilités calculé.

Au cours d'une étape C37 représentée à la figure 2B, l'unité de codage UC ou UCk teste si le bloc courant de la ligne SEk qui vient d'être codé est le dernier bloc de l'image IE. Une telle étape est également mise en œuvre si au cours de l'étape C35, le bloc courant n'est pas le jème bloc de la ligne SE1.

Si le bloc courant est le dernier bloc de l'image IE, au cours d'une étape C38, il est mis fin au procédé de codage.

Si tel n'est pas le cas, il est procédé, au cours de l'étape C39, à la sélection du bloc suivant $MB_i$ à coder conformément à l'ordre de parcours représenté par la flèche PS sur la **figure 4A ou 4B.**

Au cours d'une étape C40 représentée à la figure 2B, il est procédé à la détermination de la disponibilité de blocs précédemment codés et décodés qui sont nécessaires pour coder le bloc courant $MB_i$.

S'il s'agit de la première ligne SE1, une telle étape consiste à vérifier la disponibilité d'au moins un bloc situé à gauche du bloc courant à coder $MB_i$. Toutefois, compte tenu de l'ordre de parcours PS choisi dans le mode de réalisation représenté sur la **figure 4A ou 4B,**

les blocs sont codés les un après les autres sur une ligne SEk considérée. En conséquence, le bloc codé et décodé de gauche est toujours disponible (à l'exception du premier bloc d'une ligne). Dans l'exemple représenté sur la **figure 4A ou 4B,** il s'agit du bloc situé immédiatement à gauche du bloc courant à coder.

S'il s'agit d'une ligne SEk différente de la première ligne, ladite étape de détermination consiste en outre à vérifier si un nombre prédéterminé N' de blocs situés sur la ligne précédente SEk-1, par exemple les deux blocs situés respectivement au-dessus et au-dessus à droite du bloc courant, sont disponibles pour le codage du bloc courant, c'est-à-dire s'ils ont déjà été codés puis décodés par l'unité de codage UC ou UCk-1.

Cette étape de test étant susceptible de ralentir le procédé de codage, de façon alternative conformément à l'invention, dans le cas où le codage des lignes est de type parallèle, une horloge CLK représentée sur la **figure 3C** est adaptée pour synchroniser l'avancée du codage des blocs de façon à garantir la disponibilité des deux blocs situés respectivement au-dessus et au-dessus à droite du bloc courant, sans qu'il soit nécessaire de vérifier la disponibilité de ces deux blocs. Ainsi, une unité de codage UCk commence toujours à coder le premier bloc avec un décalage d'un nombre prédéterminé N' (avec par exemple N'=2) de blocs codés et décodés de la ligne précédente SEk-1 qui sont utilisés pour le codage du bloc courant. D'un point de vue logiciel, l'implémentation d'une telle horloge permet d'accélérer notablement le temps de traitement des blocs de l'image IE dans le codeur CO.

Au cours d'une étape C41 représentée à la figure 2B, il est testé si le bloc courant est le premier bloc de la ligne SEk considérée.

Si tel est le cas, au cours d'une étape C42, il est procédé à la lecture dans la mémoire tampon MT uniquement des probabilités d'apparition de symboles calculées lors du codage du jème bloc de la ligne précédente SEk-1.

Selon une première variante représentée à la **figure 4A,** le jème bloc est le premier bloc de la ligne précédente SEk-1 (j=1). Une telle lecture consiste à remplacer les probabilités du codeur CABAC par celles présentes dans la mémoire tampon MT. S'agissant des premiers blocs respectifs des deuxième, troisième et quatrième lignes SE2, SE3 et SE4, cette étape de lecture est matérialisée sur la **figure 4A** par les flèches représentées en traits fins.

Selon une deuxième variante de l'étape C43 précitée qui est illustrée à la **figure 4B,** le jème bloc est le deuxième bloc de la ligne précédente SEk-1 (j=2). Une telle lecture consiste à remplacer les probabilités du codeur CABAC par celles présentes dans la mémoire tampon MT. S'agissant des premiers blocs respectifs des deuxième, troisième et quatrième lignes SE2, SE3 et SE4, cette étape de lecture est matérialisée sur la **figure 4B** par les flèches représentées en traits fins pointillés.

A la suite de l'étape C42, le bloc courant est codé puis décodé par itération des étapes C34 à C38 décrites plus haut.

Si à la suite de l'étape C41 précitée, le bloc courant n'est pas le premier bloc de la ligne SEk considérée, il n'est avantageusement pas procédé à la lecture des probabilités issues du bloc précédemment codé et décodé qui se trouve sur la même ligne SEk, c'est-à-dire le bloc codé et décodé situé immédiatement à gauche du bloc courant, dans l'exemple représenté. En effet, compte tenu du parcours de lecture séquentiel PS des blocs situés sur la même ligne, comme représenté sur la **figure 4A ou 4B,** les probabilités d'apparition de symboles présentes dans le codeur CABAC au moment du commencement du codage du bloc courant sont exactement celles qui sont présentes après codage/décodage du bloc précédent sur cette même ligne.

En conséquence, au cours d'une étape C43 représentée à la figure 2B, il est procédé à l'apprentissage des probabilités d'apparition de symbole pour le codage entropique dudit bloc courant, lesquelles correspondant uniquement à celles qui ont été calculées pour ledit bloc précédent sur la même ligne, comme représenté par les doubles flèches en traits pleins sur la **figure 4A ou 4B.**

A la suite de l'étape C43, le bloc courant est codé puis décodé par itération des étapes C34 à C38 décrites plus haut.

Il est ensuite testé, au cours d'une étape C44, si le bloc courant est le dernier bloc de la ligne SEk considérée.

Si ce n'est pas le cas, à la suite de l'étape C44, l'étape C39 de sélection du bloc suivant MB$_i$ à coder est à nouveau mise en œuvre.

Si le bloc courant est le dernier bloc de la ligne SEk considérée, au cours d'une étape C45, le dispositif de codage CO de la **figure 3A ou 3C** effectue une vidange comme évoqué plus haut dans la description. A cet effet, l'unité de codage UCk transmet au module de génération de sous-flux MGSFk correspondant la totalité des bits qui ont été associés au(x) symbole(s) lu(s) lors du codage de chaque bloc de ladite ligne SEk considérée, de façon à ce que le module MGSFk écrive, dans le sous-flux de données Fm contenant un train binaire représentatif des blocs codés de ladite ligne SEk considérée, ladite totalité de bits. Une telle vidange est symbolisée sur les **figures 4A et 4B** par un triangle à la fin de chaque ligne SEk.

Au cours d'une étape C46 représentée à la figure 2B, l'unité de codage UC ou UCk effectue une étape identique à l'étape C33 précitée, c'est-à-dire initialise à nouveau l'intervalle représentatif de la probabilité d'apparition d'un symbole contenu dans l'ensemble prédéterminé de symboles. Une telle réinitialisation est matérialisée sur les **figures 4A et 4B** par un point noir en début de chaque ligne SEk.

L'intérêt d'effectuer les étapes C45 et C46 à ce niveau du codage est que lors du codage du bloc suivant traité par l'unité de codage UC ou une unité de codage UCk, le codeur CO est dans un état initialisé. Ainsi, comme cela sera décrit plus loin dans la description, il devient possible pour une unité de décodage travaillant en parallèle de décoder directement le flux compressé F à partir de ce point, puisqu'il lui suffit d'être dans l'état initialisé.

Description détaillée d'un mode de réalisation de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

Le procédé de décodage selon l'invention est représenté sous la forme d'un algorithme comportant des étapes D1 à D4, représentées à la **figure 5A.**

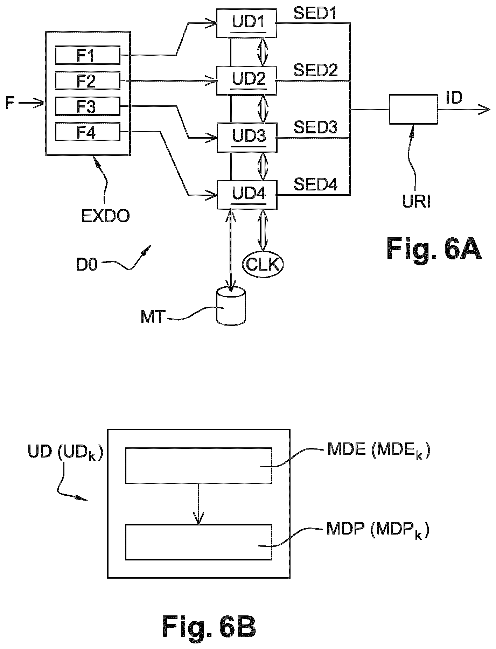

Selon le mode de réalisation de l'invention, le procédé de décodage selon l'invention est implémenté dans un dispositif de décodage DO représenté à la **figure 6A.**

En référence à la **figure 5A,** la première étape de décodage D1 est l'identification dans ledit flux F des L sous-flux F1, F2,..., Fm,..., FL contenant respectivement les P sous-ensembles SE1, SE2,...,SEk,..., SEP de blocs ou macro-blocs MB codés précédemment, comme représenté sur la **figure 4A ou 4B.** A cet effet, chaque sous-flux Fm dans le flux F est associé à un indicateur destiné à permettre au décodeur DO de déterminer l'emplacement de chaque sous-flux Fm dans le flux F. En variante, à l'issue de l'étape de codage C3 précitée, le codeur CO ordonne les sous-flux F1, F2,..., Fm,..., FL dans le flux F, selon l'ordre attendu par le décodeur DO, ce qui évite l'insertion dans le flux F des indicateurs de sous-flux. Une telle disposition permet ainsi de réduire le coût en débit du flux de données F.

Dans l'exemple représenté sur la **figure 4A** ou **4B,** lesdits blocs MB ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module EXDO d'extraction de flux tel que représenté à la **figure 6A.**

Dans l'exemple représenté sur la **figure 4A** ou **4B,** le nombre prédéterminé P est égal à 6 mais seuls quatre sous-ensembles SE1, SE2, SE3, SE4 sont représentés en trait pointillé, dans un souci de clarté des figures.

En référence à la **figure 5A,** la deuxième étape de décodage D2 est le décodage de chacun desdits sous-ensembles de blocs SE1, SE2, SE3 et SE4, les blocs d'un sous-ensemble considéré étant codés selon un ordre de parcours séquentiel PS prédéterminé. Dans l'exemple représenté sur la **figure 4A ou 4B,** les blocs d'un sous-ensemble SEk courant (1≤k≤P) sont décodés les uns après les autres, de la gauche vers la droite, comme indiqué par la flèche PS. A l'issue de l'étape D2, les sous-ensembles de blocs décodés SED1, SED2, SED3,..., SEDk,..., SEDP sont obtenus.

Un tel décodage peut être de type séquentiel et, par conséquent, être effectué à l'aide d'une seule unité de décodage.

Toutefois, afin de pouvoir bénéficier d'une architecture de décodage multiplateforme, le décodage des sous-ensembles de blocs est de type parallèle et est mis en œuvre par un nombre R d'unités de décodage UDk (1≤k≤R), avec par exemple R=4 comme représenté sur la **figure 6A.** Une telle disposition permet ainsi une accélération substantielle du procédé de décodage. De façon connue en tant que telle, le décodeur DO comprend une mémoire tampon MT qui est adaptée pour contenir les probabilités d'apparition de symboles telles que progressivement remises à jour au fur et à mesure du décodage d'un bloc courant.

Comme représenté plus en détail sur la **figure 6B,** chacune des unités de décodage UDk comprend :

- un module de décodage entropique dudit bloc courant par apprentissage d'au moins une probabilité d'apparition de symbole calculée pour au moins un bloc précédemment décodé, notée MDEk,
- un module de décodage prédictif d'un bloc courant par rapport audit bloc précédemment décodé, notée MDPk.

Le module de décodage prédictif SUDPk est apte à effectuer un décodage prédictif du bloc courant, selon les techniques de prédiction classiques, telles que par exemple en mode Intra et/ou Inter.

Le module de décodage entropique MDEk est quant à lui de type CABAC, mais modifié selon la présente invention comme cela sera décrit plus loin dans la description.

En variante, le module de décodage entropique MDEk pourrait être un décodeur de Huffman connu en tant que tel.

Dans l'exemple représenté sur la **figure 4A** ou **4B,** la première unité UD1 décode les blocs de la première ligne SE1, de gauche à droite. Lorsqu'elle parvient au dernier bloc de la première ligne SE1, elle passe au premier bloc de la (n+1)ème ligne, ici la 5ième ligne, etc. La deuxième unité UC2 décode les blocs de la deuxième ligne SE2, de gauche à droite. Lorsqu'elle parvient au dernier bloc de la deuxième ligne SE2, elle passe au premier bloc de la (n+2)ème ligne, ici la 6ième ligne, etc. Ce parcours se répète jusqu'à l'unité UD4, qui décode les blocs de la quatrième ligne SE4, de gauche à droite. Lorsqu'elle parvient au dernier bloc de la première ligne, elle passe au premier bloc de la (n+4)$^{ème}$ ligne, ici la 8$^{ième}$ ligne, et ainsi de suite jusqu'à ce que le dernier bloc du dernier sous-flux identifié soit décodé.

D'autres types de parcours que celui qui vient d'être décrit ci-dessus sont bien sûr possibles. Par exemple, chaque unité de décodage pourrait traiter non pas des lignes imbriquées, comme expliqué ci-dessus, mais des colonnes imbriquées. Il est également possible de parcourir les lignes ou colonnes dans un sens ou dans l'autre.

En référence à la **figure 5A,** la troisième étape de décodage D3 est la reconstruction d'une image décodée ID à partir de chaque sous-ensemble décodé SED1, SED2,..., SEDk,..., SEDP obtenu à l'étape de décodage D2. Plus précisément, les blocs décodés de chaque sous-ensemble décodé SED1, SED2,..., SEDk,..., SEDP sont transmis à une unité URI de reconstruction d'image telle que représentée à la **figure 6A.** Au cours de cette étape D3, l'unité URI écrit les blocs décodés dans une image décodée au fur et à mesure que ces blocs deviennent disponibles.

Au cours d'une quatrième étape de décodage D4 représentée à la **figure 5A,** une image ID entièrement décodée est délivrée par l'unité URI représentée **figure 6A.**

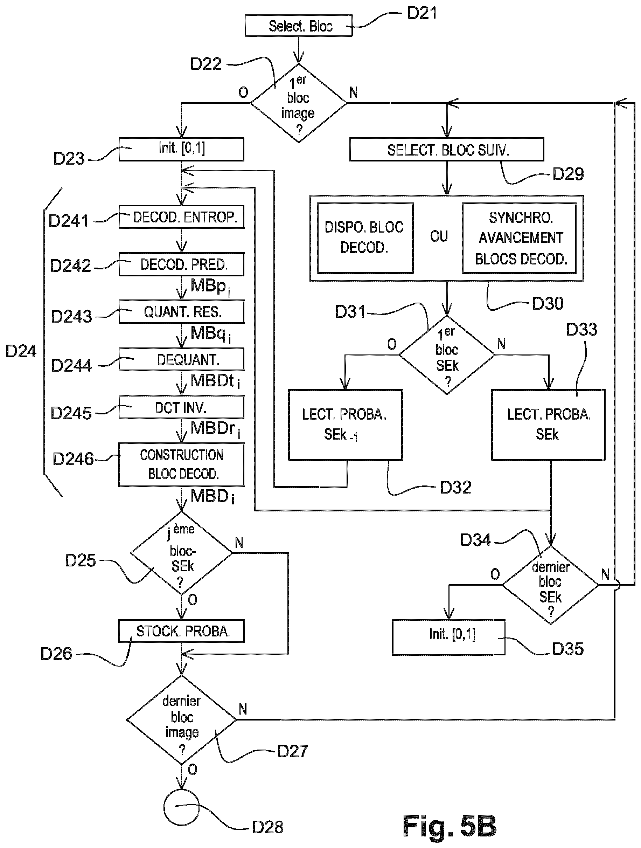

On va maintenant décrire, en référence à la **figure 5B,** les différentes sous-étapes spécifiques de l'invention, telles que mises en œuvre lors de l'étape D2 de décodage en parallèle précitée, dans une unité de décodage UDk.

Au cours d'une étape D21, l'unité de décodage UDk sélectionne comme bloc courant le premier bloc à décoder de la ligne SEk courante représentée à la **figure 4A** ou **4B.**

Au cours d'une étape D22, l'unité de décodage UDk teste si le bloc courant est le premier bloc de l'image décodée, en l'espèce le premier bloc du sous-flux F1.

Si tel est le cas, au cours d'une étape D23, le module de décodage entropique MDE ou MDEk procède à une initialisation de ses variables d'état. Selon l'exemple représenté, il s'agit d'une initialisation d'un intervalle représentatif de la probabilité d'apparition d'un symbole contenu dans l'ensemble prédéterminé de symboles.

En variante, si le décodage entropique utilisé est le décodage LZW, une table de traduction de chaînes de symboles est initialisée, de sorte qu'elle contienne une et une seule fois tous les symboles possibles. L'étape D23 étant identique à l'étape de codage C33 précitée, elle ne sera pas décrite plus avant.

Si à la suite de l'étape D22 précitée, le bloc courant n'est pas le premier bloc de l'image décodée ID, il est procédé, au cours d'une étape D30 qui sera décrite ultérieurement dans la suite de la description, à la détermination de la disponibilité des blocs précédemment décodés nécessaires.

Au cours d'une étape D24, il est procédé au décodage du premier bloc courant MB1 de la première ligne SE1 représentée sur la **figure 4A** ou **4B.** Une telle étape D24 comprend une pluralité de sous-étapes D241 à D246 qui vont être décrites ci-dessous.

Au cours d'une première sous-étape D241, il est procédé au décodage entropique des éléments de syntaxe liés au bloc courant. Une telle étape consiste principalement à :

   a) lire les bits contenus dans le sous-flux associé à ladite première ligne SE1,
   b) reconstruire les symboles à partir des bits lus.

Dans la variante précitée selon laquelle le décodage utilisé est un décodage LZW, une information numérique correspondant au code du symbole dans la table de traduction courante est lue, le symbole est reconstruit à partir du code lu et une mise à jour de la table de traduction est effectuée, selon une méthode connue en soi.

Plus précisément, les éléments de syntaxe liés au bloc courant sont décodés par le module MDE1 de décodage entropique CABAC tel que représentée à la **figure 6B.** Ce dernier décode le sous-flux de bits F1 du fichier compressé pour produire les éléments de syntaxe, et, en même temps, remet à jour ses probabilités de façon à ce que, au moment où celui-ci décode un symbole, les probabilités d'apparition de ce symbole soient identiques à celles obtenues lors du codage de ce même symbole lors de l'étape de codage entropique précitée C345.

Au cours d'une sous-étape suivante D242, il est procédé au décodage prédictif du bloc courant MB1 par des techniques connues de prédiction intra et/ou inter, au cours duquel le bloc MB1 est prédit par rapport à au moins un bloc précédemment décodé.

Il va de soi que d'autres modes de prédiction intra tels que proposé dans la norme H.264 sont possibles.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit MBp$_1$.

Au cours d'une sous-étape suivante D243, il est procédé à la construction d'un bloc résidu quantifié MBq$_1$ à l'aide des éléments de syntaxe décodés précédemment.

Au cours d'une sous-étape suivante D244, il est procédé à la déquantification du bloc résidu quantifié MBq$_1$ selon une opération classique de déquantification qui est l'opération inverse de la quantification effectuée à l'étape C344 précitée, pour produire un bloc déquantifié

décodé MBDt$_1$.

Au cours d'une sous-étape suivante D245, il est procédé à la transformation inverse du bloc déquantifiés MBDt$_1$ qui est l'opération inverse de la transformation directe effectuée à l'étape C343 ci-dessus. Un bloc résidu décodé MBDr$_1$ est alors obtenu.

Au cours d'une sous-étape suivante D246, il est procédé à la construction du bloc décodé MBD$_1$ en ajoutant ou bloc prédit MBp$_1$ le bloc résidu décodé MBDr$_1$. Le bloc décodé MBD$_1$ est ainsi rendu disponible pour être utilisé par l'unité de décodage UD1 ou toute autre unité de décodage faisant partie du nombre prédéterminé N d'unités de décodage.

A l'issue de l'étape de décodage D246 précitée, le module de décodage entropique MDE1 tel que représenté à la **figure 6B** contient toutes les probabilités telles que progressivement remises à jour au fur et à mesure du décodage du premier bloc. Ces probabilités correspondent aux différents éléments de syntaxes possibles et aux différents contextes de décodage associés.

A la suite de l'étape de décodage D24 précitée, il est testé, au cours d'une étape D25, si le bloc courant est le jème bloc de cette même ligne, où j est une valeur prédéterminée connue du décodeur DO qui est au moins égale à 1.

Si tel est le cas, au cours d'une étape D26, l'ensemble des probabilités calculé pour le jème bloc est stocké dans la mémoire tampon MT du décodeur DO telle que représentée à la **figure 6A** et à la **figure 4A** ou **4B,** la taille de ladite mémoire étant adaptée à stocker le nombre de probabilités calculé.

Au cours d'une étape D27, l'unité UDk teste si le bloc courant qui vient d'être décodé est le dernier bloc du dernier sous-flux.

Si tel est le cas, au cours d'une étape D28, il est mis fin au procédé de décodage.

Si tel n'est pas le cas, il est procédé, au cours de l'étape D29 à la sélection du bloc suivant MB$_i$ à décoder conformément à l'ordre de parcours représenté par la flèche PS sur la **figure 4A** ou **4B.**

Si au cours de l'étape D25 précitée, le bloc courant n'est pas le jème bloc de la ligne SEDk considérée, il est procédé à l'étape D27 ci-dessus.

Au cours d'une étape D30 qui fait suite à l'étape D29 précitée, il est procédé à la détermination de la disponibilité de blocs précédemment décodés qui sont nécessaires pour décoder le bloc courant MB$_i$. Compte tenu du fait qu'il s'agit d'un décodage en parallèle des blocs par des unités de décodage UDk différentes, il se peut que ces blocs n'aient pas été décodés par l'unité de décodage affecté au décodage de ces blocs et qu'ils ne soient donc pas encore disponibles. Ladite étape de détermination consiste à vérifier si un nombre prédéterminé N' de blocs situés sur la ligne précédente SEk-1, par exemple les deux blocs situés respectivement au-dessus et au-dessus à droite du bloc courant, sont disponibles pour le décodage du bloc courant, c'est-à-dire s'ils ont déjà été décodés par l'unité de décodage UDk-1 affectée au décodage de ces derniers. Ladite étape de détermination consiste également à vérifier la disponibilité d'au moins un bloc situé à gauche du bloc courant à décoder MB$_i$. Toutefois, compte tenu de l'ordre de parcours PS choisi dans le mode de réalisation représenté sur la **figure 4A** ou **4B,** les blocs sont décodés les un après les autres sur une ligne SEk considérée. En conséquence, le bloc décodé de gauche est toujours disponible (à l'exception du premier bloc d'une ligne). Dans l'exemple représenté sur la **figure 4A** ou **4B,** il s'agit du bloc situé immédiatement à gauche du bloc courant à décoder. A cet effet, seule est testée la disponibilité des deux blocs situés respectivement au-dessus et au-dessus à droite du bloc courant.

Cette étape de test étant susceptible de ralentir le procédé de décodage, de façon alternative conformément à l'invention, une horloge CLK représentée sur la **figure 6A** est adaptée pour synchroniser l'avancée du décodage des blocs de façon à garantir la disponibilité des deux blocs situés respectivement au-dessus et au-dessus à droite du bloc courant, sans qu'il soit nécessaire de vérifier la disponibilité de ces deux blocs. Ainsi, comme représenté à la **figure 4A** ou **4B,** une unité de décodage UDk commence toujours à décoder le premier bloc avec un décalage d'un nombre prédéterminé N' (ici N'=2) de blocs décodés de la ligne précédente SEk-1 qui sont utilisés pour le décodage du bloc courant. D'un point de vue logiciel, l'implémentation d'une telle horloge permet d'accélérer notablement le temps de traitement des blocs de chaque sous-ensemble SEk dans le décodeur DO.

Au cours d'une étape D31, il est testé si le bloc courant est le premier bloc de la ligne SEk considérée.

Si tel est le cas, au cours d'une étape D32, il est procédé à la lecture dans la mémoire tampon MT uniquement des probabilités d'apparition de symboles calculées lors du décodage du jème bloc de la ligne précédente SEk-1.

Selon une première variante représentée à la **figure 4A,** le jème bloc est le premier bloc de la ligne précédente SEk-1 (j=1) Une telle lecture consiste à remplacer les probabilités du décodeur CABAC par celles présentes dans la mémoire tampon MT. S'agissant des premiers blocs respectifs des deuxième, troisième et quatrième lignes SE2, SE3 et SE4, cette étape de lecture est matérialisée sur la **figure 4A** par les flèches représentées en traits fins.

Selon une deuxième variante de l'étape D32 précitée qui est illustrée à la **figure 4B,** le jème bloc est le deuxième bloc de la ligne précédente SEk-1 (j=2). Une telle lecture consiste à remplacer les probabilités du décodeur CABAC par celles présentes dans la mémoire tampon MT. S'agissant des premiers blocs respectifs des deuxième, troisième et quatrième lignes SE2, SE3 et SE4, cette étape de lecture est matérialisée sur la **figure 4B** par les flèches représentées en traits fins pointillés.

A la suite de l'étape D32, le bloc courant est décodé par itération des étapes D24 à D28 décrites plus haut.

Si à la suite de l'étape D31 précitée, le bloc courant n'est pas le premier bloc de la ligne SEk considérée, il n'est avantageusement pas procédé à la lecture des probabilités issues du bloc précédemment décodé qui se trouve sur la même ligne SEk, c'est-à-dire le bloc décodé situé immédiatement à gauche du bloc courant, dans l'exemple représenté. En effet, compte tenu du parcours de lecture séquentiel PS des blocs situés sur la même ligne, comme représenté sur la **figure 4A** ou **4B,** les probabilités d'apparition de symboles présentes dans le décodeur CABAC au moment du commencement du décodage du bloc courant sont exactement celle qui sont présentes après décodage du bloc précédent sur cette même ligne.

En conséquence, au cours d'une étape D33, il est procédé à l'apprentissage des probabilités d'apparition de symbole pour le décodage entropique dudit bloc courant, lesquelles probabilités correspondant uniquement à celles qui ont été calculées pour ledit bloc précédent sur la même ligne, comme représenté par les doubles flèches en traits pleins sur la **figure 4A** ou **4B.**

A la suite de l'étape D33, le bloc courant est décodé par itération des étapes D24 à D28 décrites plus haut.

Il est ensuite testé, au cours d'une étape D34, si le bloc courant est le dernier bloc de la ligne SEk considérée.

Si ce n'est pas le cas, à la suite de l'étape D34, l'étape D29 de sélection du bloc suivant $MB_i$ à coder est à nouveau mise en œuvre.

Si le bloc courant est le dernier bloc de la ligne SEk considérée, au cours d'une étape D35, l'unité de décodage UDk effectue une étape identique à l'étape D23 précitée, c'est-à-dire initialise à nouveau l'intervalle représentatif de la probabilité d'apparition d'un symbole contenu dans l'ensemble prédéterminé de symboles. Une telle réinitialisation est matérialisée sur les **figures 4A** et **4B** par un point noir en début de chaque ligne SEk.

Ainsi, le décodeur DO se trouve dans un état initialisé à chaque début de ligne, ce qui permet une grande souplesse du point de vue du choix du niveau de parallélisme de décodage et une optimisation du temps de traitement au décodage.

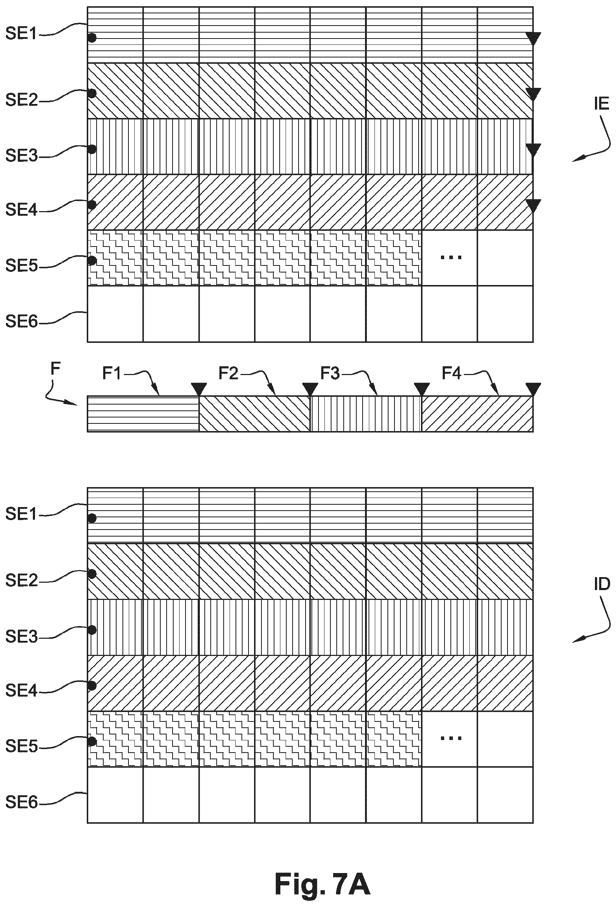

Dans l'exemple de schéma de codage/décodage représenté sur la **figure 7A,** le codeur CO comprend une seule unité de codage UC, comme représenté sur la **figure 3A,** tandis que le décodeur DO comprend six unités de décodage.

L'unité de codage UC code séquentiellement les lignes SE1, SE2, SE3, SE4, SE5 et SE6. Dans l'exemple représenté, les lignes SE1 à SE4 sont entièrement codées, la ligne SE5 est en cours de codage et la ligne SE6 n'a pas encore été codée. Compte tenu de la séquentialité du codage, l'unité de codage UC est adaptée à délivrer un flux F qui contient les sous-flux F1, F2, F3, F4 ordonnés à la suite les uns des autres, dans l'ordre de codage des lignes SE1, SE2, SE3 et SE4. A cet effet, les sous-flux F1, F2, F3 et F4 sont symbolisés avec les mêmes hachures que celles qui symbolisent respectivement les lignes SE1, SE2, SE3, SE4 codées. Grâce aux étapes de vidange en fin de codage desdites lignes codées et à la réinitialisation de l'intervalle de probabilités au démarrage du codage ou du décodage de la ligne suivante à coder/décoder, le décodeur DO, à chaque fois qu'il lit un sous-flux pour le décoder, est dans un état initialisé et peut donc, de façon optimale, décoder en parallèle les quatre sous-flux F1, F2, F3, F4 avec des unités de décodage UD1, UD2, UD3 et UD4 qui peuvent par exemple être installées sur quatre plateformes différentes.

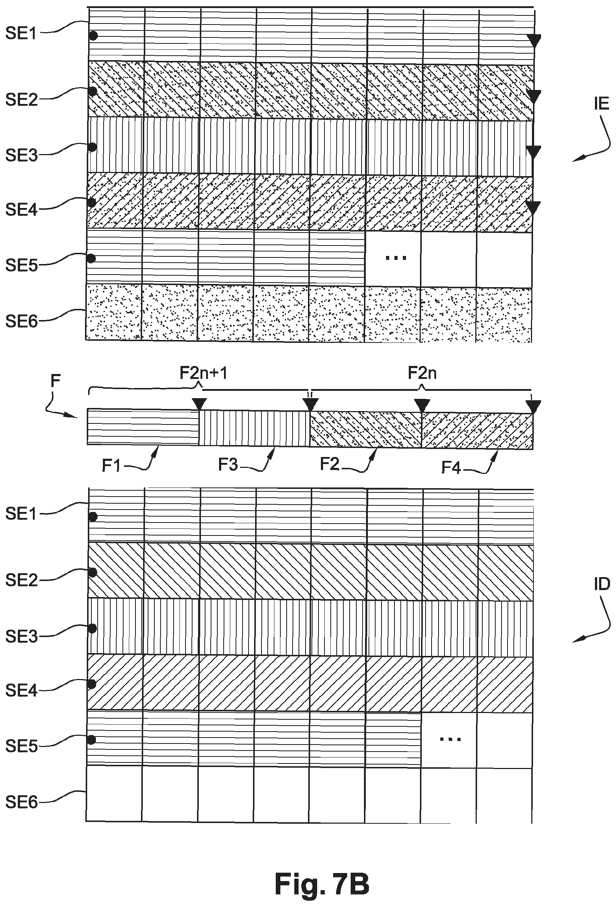

Dans l'exemple de schéma de codage/décodage représenté sur la **figure 7B,** le codeur CO comprend deux unités de codage UC1 et UC2, comme représenté sur la **figure 3C,** tandis que le décodeur DO comprend six unités de décodage.

L'unité de codage UC1 code séquentiellement les lignes de rang impair SE1, SE3 et SE5, tandis que l'unité de codage UC2 code séquentiellement les lignes de rang pair SE2, SE4 et SE6. A cet effet, les lignes SE1, SE3 et SE5 présentent un fond blanc, tandis que les lignes SE2, SE4 et SE6 présentent un fond en pointillé. Dans l'exemple représenté, les lignes SE1 à SE4 sont entièrement codées, la ligne SE5 est en cours de codage et la ligne SE6 n'a pas encore été codée. Compte tenu du fait que le codage effectué est de type parallèle de niveau 2, l'unité de codage UC1 est adaptée à délivrer un sous-flux $F_{2n+1}$ décomposé en deux parties F1 et F3 obtenues suite au codage respectivement des lignes SE1 et SE3, tandis que l'unité de codage UC2 est adaptée à délivrer un sous-flux $F_{2n}$ décomposé en deux parties F2 et F4 obtenues suite au codage respectivement des lignes SE2 et SE4. Le codeur CO est donc adapté à transmettre au décodeur DO un flux F qui contient la juxtaposition des deux sous-flux $F_{2n+1}$ et $F_{2n}$ et donc un ordonnancement des sous-flux F1, F3, F2, F4 qui diffère de celui représenté **figure 7A.** A cet effet, les sous-flux F1, F2, F3 et F4 sont symbolisés avec les mêmes hachures que celles qui symbolisent respectivement les lignes SE1, SE2, SE3, SE4 codées, les sous-flux F1 et F3 présentant un fond blanc (codage des lignes de rang impair) et les sous-flux F2 et F4 présentant un fond en pointillé (codage des lignes de rang pair).

Par rapport aux avantages mentionnés en liaison avec la **figure 7A,** un tel schéma de codage/décodage présente en outre l'avantage de pouvoir disposer d'un décodeur dont le niveau de parallélisme de décodage est complètement indépendant du niveau de parallélisme du codage, ce qui permet d'optimiser encore davantage le fonctionnement d'un codeur/décodeur.

**Modes de réalisation**

Bien que l'invention présente soit définie dans les revendications attachées, il devrait être compris que l'invention présente peut aussi (à l'alternat) être définie conformément aux modes de réalisation suivantes:

1. Procédé de codage d'au moins une image comprenant les étapes de :

- découpage (C1) de l'image en une pluralité de blocs (MB) aptes à contenir des symboles appartenant à un ensemble prédéterminé de symboles,
- regroupement (C2) de blocs en un nombre prédéterminé (P) de sous-ensembles de blocs (SE1, SE2,..., SEk,..., SEP),
- codage (C3), au moyen d'un module de codage entropique, de chacun desdits sous-ensembles de blocs, par association d'informations numériques aux symboles de chaque bloc d'un sous-ensemble considéré, ladite étape de codage comprenant, pour le premier bloc de l'image, une sous-étape (C33) d'initialisation de variables d'état dudit module de codage entropique,
- génération (C4) d'au moins un sous-flux de données (F1) représentatif d'au moins un (SE1) desdits sous-ensembles de blocs codés,

ledit procédé de codage étant caractérisé en ce que :

- dans le cas où le bloc courant est le premier bloc à coder d'un sous-ensemble considéré, détermination (C42) de probabilités d'apparition de symbole pour ledit premier bloc courant, lesdites probabilités étant celles qui ont été déterminées pour un bloc prédéterminé codé et décodé d'au moins un autre sous-ensemble,
- dans le cas où le bloc courant est le dernier bloc codé du sous-ensemble considéré:

    • écriture (C45), dans le sous-flux représentatif dudit au moins sous-ensemble considéré, de la totalité des informations numériques qui ont été associées aux symboles lors du codage des blocs dudit sous-ensemble considéré,
    • mise en œuvre (C46) de ladite sous-étape d'initialisation.

2. Procédé de codage selon la réalisation 1, au cours duquel les sous-ensembles de blocs (SE1, SE2,..., SEk,..., SEP) sont codés séquentiellement ou bien en parallèle.

3. Procédé selon la réalisation 2, au cours duquel lorsqu'au moins deux sous-ensembles de blocs (SE1, SE3) sont codés parallèlement à au moins un autre sous-ensemble de blocs (SE2), lesdits au moins deux sous-ensembles de blocs codés sont contenus dans le même sous-flux de données ($F_{2N+1}$).

4. Procédé de codage selon l'une quelconque des réalisation 1 à 3, au cours duquel lorsque lesdits sous-ensembles de blocs codés sont destinés à être décodés en parallèle selon un ordre prédéterminé, les sous-flux de données délivrés après codage respectivement de chacun desdits sous-ensembles de blocs sont préalablement ordonnés selon ledit ordre prédéterminé avant d'être transmis en vue de leur décodage.

5. Dispositif de codage (CO) d'au moins une image comprenant :

- des moyens (PCO) de découpage de l'image en une pluralité de blocs (MB) aptes à contenir des symboles appartenant à un ensemble prédéterminé de symboles,
- des moyens (GRCO) de regroupement desdits blocs en un nombre prédéterminé (P) de sous-ensembles de blocs,
- des moyens (UC ; UC1, UC2,..., UCk,..., UCP) de codage de chacun desdits sous-ensembles de blocs, lesdits moyens de codage comprenant un module de codage entropique (MCE ; MCEk) apte à associer des informations numériques aux symboles de chaque bloc d'un sous-ensemble considéré, lesdits moyens de codage comprenant, pour le premier bloc de l'image, des sous-moyens d'initialisation de variables d'état dudit module de codage entropique,
- des moyens (MGSF ; MGSFk) de génération d'au moins un sous-flux de données (F1) représentatif d'au moins un desdits sous-ensembles de blocs codés,

ledit dispositif de codage étant caractérisé en ce qu'il comprend :

- des moyens de détermination de probabilités d'apparition de symbole pour un bloc courant qui, dans le cas où le bloc courant est le premier bloc à coder d'un sous-ensemble considéré, déterminent les probabilités d'apparition de symbole pour ledit premier bloc comme étant celles qui ont été déterminées pour un bloc prédéterminé codé et décodé d'au moins un autre sous-ensemble,
- des moyens d'écriture qui, dans le cas où le bloc courant est le dernier bloc codé dudit sous-ensemble considéré, sont activés pour écrire, dans le sous-flux représentatif dudit sous-ensemble considéré, la totalité des informations numériques qui ont été associées aux symboles lors du codage des blocs dudit sous-ensemble considéré,

lesdits sous-moyens d'initialisation étant en outre activés pour réinitialiser les variables d'état dudit module de codage entropique.

6. Programme d'ordinateur comportant des instructions pour mettre en œuvre le procédé de codage selon l'une quelconque des réalisation1 à 4, lorsqu'il est exécuté sur un ordinateur.

7. Support d'enregistrement lisible par un ordinateur sur lequel est enregistré un programme d'ordinateur comprenant des instructions pour l'exécution des étapes du procédé de codage selon l'une quelconque des réalisation 1 à 4, lorsque ledit programme est exécuté par un ordinateur.

8. Procédé de décodage d'un flux (F) représentatif d'au moins une image codée, comprenant les étapes de :

- identification (D1) dans ledit flux d'un nombre prédéterminé de sous-flux de données (F1, F2,...,Fm,..., FL) correspondant respectivement à au moins un sous-ensemble de blocs à décoder, lesdits blocs étant aptes à contenir des symboles appartenant à un ensemble prédéterminé de symboles,
- décodage (D2) desdits sous-ensembles de blocs identifiés au moyen d'un module de décodage entropique, par lecture, dans au moins un desdits sous-flux identifiés, d'informations numériques associées aux symboles de chaque bloc du sous-ensemble correspondant audit au moins un sous-flux identifié, ladite étape de décodage comprenant, pour le premier bloc à décoder de l'image, une sous-étape (D23) d'initialisation de variables d'état dudit module de décodage entropique,

ledit procédé de décodage étant caractérisé en ce que :

- dans le cas où le bloc courant est le premier bloc à décoder d'un sous-ensemble considéré, détermination (D32) de probabilités d'apparition de symbole pour le premier bloc dudit sous-ensemble considéré, lesdites probabilités étant celles qui ont été déterminées pour un bloc prédéterminé décodé d'au moins un autre sous-ensemble,
- dans le cas où le bloc courant est le dernier bloc décodé du sous-ensemble considéré, mise en œuvre (D35) de ladite sous-étape d'initialisation.

9. Procédé de décodage selon la réalisation 8, au cours duquel les sous-ensembles de blocs sont décodés séquentiellement ou bien en parallèle.

10. Procédé selon la réalisation 9, au cours duquel lorsqu'au moins deux sous-ensembles de blocs sont décodés parallèlement à au moins un autre sous-ensemble de blocs, un des sous-flux de données identifiés est représentatif desdits au moins deux sous-ensembles de blocs.

11. Procédé de décodage selon la réalisation 9 ou la réalisation 10, au cours duquel lorsque lesdits sous-ensembles de blocs codés sont destinés à être décodés en parallèle selon un ordre prédéterminé, les sous-flux de données correspondant respectivement auxdits sous-ensembles de blocs codés sont ordonnés préalablement selon ledit ordre prédéterminé dans ledit flux à décoder.

12. Dispositif (DO) de décodage d'un flux (F) représentatif d'au moins une image codée, comprenant :

- des moyens (EXDO) d'identification dans ledit flux d'un nombre prédéterminé de sous-flux de données (F1, F2,..,Fm,., FL) correspondant respectivement à au moins un sous-ensemble de blocs à décoder, lesdits blocs étant aptes à contenir des symboles appartenant à un ensemble prédéterminé de symboles,
- des moyens (UD ; UD1, UD2,...,UDk,...UDP) de décodage desdits sous-ensembles de blocs identifiés, lesdits moyens de décodage comprenant un module de décodage entropique (MDE ; MDE1, MDE2,..., MDEk,...,MDEP) apte à lire, dans au moins un desdits sous-flux identifiés, des informations numériques associées aux symboles de chaque bloc du sous-ensemble correspondant audit au moins un sous-flux identifié, lesdits moyens de décodage comprenant, pour le premier bloc à décoder de l'image, des sous-moyens d'initialisation de variables d'état dudit module de décodage entropique,

ledit dispositif de décodage étant caractérisé en ce qu'il comprend des moyens de détermination de probabilités d'apparition de symbole pour un bloc courant qui, dans le cas où le bloc courant est le premier bloc à décoder d'un sous-ensemble considéré, déterminent les probabilités d'apparition de symbole pour ledit premier bloc comme étant celles qui ont été déterminées pour un bloc prédéterminé décodé d'au moins un autre sous-ensemble, et en ce que dans le cas où le bloc courant est le dernier bloc décodé du sous-ensemble considéré, lesdits sous-moyens d'initialisation sont activés pour réinitialiser les variables d'état dudit module de décodage entropique.

13. Programme d'ordinateur comportant des instructions pour mettre en œuvre le procédé de décodage selon l'une quelconque des réalisation 8 à 11, lorsqu'il est exécuté sur un ordinateur.

14. Support d'enregistrement lisible par un ordinateur sur lequel est enregistré un programme d'ordinateur comprenant des instructions pour l'exécution des étapes du procédé de décodage selon l'une quelconque des réalisation 8 à 11, lorsque ledit programme est exécuté par un ordinateur.

**Revendications**

1. Procédé de codage d'au moins une image comprenant les étapes de :

   - découpage (C1) de l'image en une pluralité de blocs (MB) aptes à contenir des symboles appartenant à un ensemble prédéterminé de symboles,
   - regroupement (C2) de blocs en un nombre prédéterminé (P) des lignes de blocs (SE1, SE2, ..., SEk, ..., SEP),
   - codage (C3), au moyen d'un module de codage entropique (UC; UC1, UC2, ..., UCk, ..., UCP), de chacune desdites lignes de blocs, par association d'informations numériques aux symboles de chaque bloc d'une ligne considérée (SEk), ladite étape de codage comprenant, pour le premier bloc de l'image, une sous étape (C33) d'initialisation de variables d'état dudit module de codage entropique,
   - génération (C4) (i) d'un nombre (L) de sous-flux de données (F1, F2, ..., Fm, ..., FL) représentatif des lignes de blocs codées (SE1, SE2, ..., SEk, ..., SEP) ainsi que (ii) des lignes de blocs décodées (SED1, SED2, ..., SEDk, ..., SEDP) , ledit procédé de codage comprenant en outre les étapes de :

      dans le cas où le bloc courant est (C41) le premier bloc à coder d'une ligne considérée (SEk) différente d'une première ligne (SE1) , détermination (C42) de probabilités d'apparition de symbole pour ledit premier bloc courant, lesdites probabilités étant celles qui ont été déterminées pour un bloc prédéterminé codé et décodé d'au moins une autre ligne (SED1, SED2, ..., SEDk, ..., SEDP) et qui ont été stockées une mémoire tampon (MT) , le bloc prédéterminé étant le premier ou deuxième bloc de la ligne précédente (SEk-1) , et
      dans le cas où le bloc courant est le dernier bloc codé de la ligne considérée
      écriture (C45), dans le sous-flux représentatif de la ligne considérée (Fm), de la totalité des informations numériques qui ont été associées aux symboles lors du codage des blocs mise en œuvre (C46) de ladite sous-étape (C33) d'initialisation.

2. Procédé de codage selon la revendication 1, au cours duquel les lignes de blocs (SE1, SE2, ..., SEk, ..., SEP) sont codées séquentiellement ou bien en parallèle.

3. Procédé selon la revendication 2, au cours duquel lorsqu'au moins deux lignes de blocs (SE1, SE3) sont codées parallèlement à au moins une autre ligne de blocs (SE2), lesdits au moins deux lignes de blocs codées sont contenues dans le même sous-flux de données (F2N+1).

4. Procédé de codage selon l'une quelconque des revendications 1 à 3, au cours duquel lorsque lesdites lignes de blocs codées sont destinées à être décodées en parallèle selon un ordre prédéterminé, les sous-flux de données délivrés après codage respectivement de chacun desdites lignes de blocs sont préalablement ordonnés selon ledit ordre prédéterminé avant d'être transmis en vue de leur décodage.

5. Dispositif de codage (CO) d'au moins une image comprenant :

   - des moyens (PCO) de découpage de l'image en une pluralité de blocs (MB) aptes à contenir des symboles appartenant à un ensemble prédéterminé de symboles,
   - des moyens (GRCO) de regroupement desdits blocs en un nombre prédéterminé (P) des lignes de blocs (SE1, SE2, ..., SEk, ..., SEP) ,
   - des moyens (UC; UC1, UC2, ..., UCk, ..., UCP) de codage de chacune desdites lignes de blocs, lesdits moyens de codage comprenant un module de codage entropique (MCE ; MCEk) apte à associer des informations numériques aux symboles de chaque bloc d'un sous ensemble considéré, lesdits moyens de codage comprenant, pour le premier bloc de l'image, des sous-moyens d'initialisation de variables d'état dudit module de codage entropique,
   - des moyens (MGSF ; MGSFk) de génération (i) d'un nombre (L) de sous-flux de données (F1, F2, ..., Fm, ..., FL) représentatif des lignes de blocs codées (SE1, SE2, ..., SEk, ..., SEP) ainsi que (ii) des lignes de blocs décodées (SED1, SED2, ..., SEDk, ..., SEDP) , ledit dispositif de codage comprenant en outre :
   - des moyens de détermination de probabilités d'apparition de symbole pour un bloc courant qui, dans le cas où le bloc courant est (C41) le premier bloc à coder d'une ligne considérée (SEk) différente d'une première ligne (SE1), déterminent les probabilités d'apparition de symbole pour ledit premier bloc comme étant celles qui ont été déterminées pour un bloc prédéterminé codé et décodé d'au moins un autre ligne (SED1, SED2, ..., SEDk, ..., SEDP) et qui ont été stockées dans une mémoire tampon (MT) , le bloc prédéterminé étant le premier ou deuxième bloc de la ligne précédente (SEk-1),

- des moyens d'écriture qui, dans le cas où le bloc courant est le dernier bloc codé de la ligne considérée, sont activés pour écrire, dans le sous-flux représentatif de la ligne considérée, la totalité des informations numériques qui ont été associées aux symboles lors du codage des blocs de ladite ligne considérée (SEk),

lesdits sous-moyens d'initialisation étant en outre activés pour réinitialiser les variables d'état dudit module de codage entropique.

**6.** Programme d'ordinateur comportant des instructions pour mettre en œuvre le procédé de codage selon l'une quelconque des revendications 1 à 4, lorsqu'il est exécuté sur un ordinateur.

**7.** Support d'enregistrement lisible par un ordinateur sur lequel est enregistré un programme d'ordinateur comprenant des instructions pour l'exécution des étapes du procédé de codage selon l'une quelconque des revendications 1 à 4, lorsque ledit programme est exécuté par un ordinateur.

**8.** Procédé de décodage d'un flux de données (F) représentatif d'au moins une image codée, le flux de données (F) étant représentatif des lignes de blocs à décoder (SE1, SE2, ..., SEk, ..., SEP) , le procédé comprenant les étapes de :

- identification (D1) dans ledit flux d'un nombre prédéterminé (L) de sous-flux de données (F1, F2, ..., Fm, ..., FL) correspondant respectivement à au moins une ligne de blocs à décoder, lesdits blocs étant aptes à contenir des symboles appartenant à un ensemble prédéterminé de symboles,
- décodage (D2) desdites lignes de blocs identifiées au moyen d'un module de décodage entropique, par lecture, dans au moins un desdits sous-flux identifiés, d'informations numériques associées aux symboles de chaque bloc de la ligne correspondant audit au moins un sous-flux identifié, ladite étape de décodage comprenant, pour le premier bloc à décoder de l'image, une sous-étape (D23) d'initialisation de variables d'état dudit module de décodage entropique, ledit procédé de décodage comprenant en outre les étapes de :

dans le cas où le bloc courant est le premier bloc à décoder d'une ligne considérée (SEk) différente d'une première ligne (SE1), détermination (D32) de probabilités d'apparition de symbole pour le premier bloc de ladite ligne considérée (SEk), lesdites probabilités étant celles qui ont été déterminées pour un bloc prédéterminé décodé d'au moins une autre ligne (SED1, SED2, ..., SEDk, ..., SEDP) et qui ont été stockées dans une mémoire tampon (MT), le bloc prédéterminé étant le premier ou deuxième bloc de la ligne précédente (SEk-1), et

dans le cas où le bloc courant est le dernier bloc décodé de la ligne considérée, mise en œuvre (D35) de ladite sous-étape d'initialisation.

**9.** Procédé de décodage selon la revendication 8, au cours duquel les lignes de blocs sont décodées séquentiellement ou bien en parallèle.

**10.** Procédé selon la revendication 9, au cours duquel lorsqu'au moins deux lignes de blocs sont décodées parallèlement à au moins une autre ligne de blocs, un des sous-flux de données identifiés est représentatif desdits au moins deux lignes de blocs.

**11.** Procédé de décodage selon la revendication 9 ou la revendication 10, au cours duquel lorsque lesdites lignes de blocs codées sont destinées à être décodées en parallèle selon un ordre prédéterminé, les sous-flux de données correspondant respectivement auxdites lignes de blocs codées sont ordonnés préalablement selon ledit ordre prédéterminé dans ledit flux à décoder.

**12.** Dispositif de décodage (DO) d'un flux (F) représentatif d'au moins une image codée, le flux de données (F) étant représentatif des lignes de blocs à décoder (SE1, SE2, ..., SEk, ..., SEP), le dispositif de décodage comprenant :

- des moyens (EXDO) d'identification dans ledit flux d'un nombre prédéterminé (L) de sous-flux de données (F1, F2, ..., Fm, ..., FL) correspondant respectivement à au moins une ligne de blocs à décoder, lesdits blocs étant aptes à contenir des symboles appartenant à un ensemble prédéterminé de symboles,
- des moyens (UD; UD1, UD2, ..., UDk, ..., UDP) de décodage desdites lignes de blocs identifiées, lesdits moyens de décodage comprenant un module de décodage entropique (MDE; MDE1, MDE2, ..., MDEk, ..., MDEP) apte à lire, dans au moins un desdits sous-flux identifiés, des informations numériques associées aux symboles de chaque bloc de la ligne correspondante audit au moins un sous-flux identifié, lesdits moyens de décodage comprenant, pour le premier bloc à décoder de l'image, des sous-moyens d'initialisation de variables d'état dudit module de décodage entropique, ledit dispositif de décodage comprenant en outre des moyens de détermination de probabilités d'apparition de symbole pour un bloc courant qui,

dans le cas où le bloc courant est le premier bloc à décoder d'une ligne considérée (SEk) différente d'une première ligne (SE1), déterminent les probabilités d'apparition de symbole pour ledit premier bloc comme étant celles qui ont été déterminées pour un bloc prédéterminé décodé d'au moins une autre ligne (SED1, SED2, ..., SEDk, ..., SEDP) et qui ont été stockées dans une mémoire tampon (MT), le bloc prédéterminé étant le premier ou deuxième bloc de la ligne précédente (SEk-1), et dans lequel,

dans le cas où le bloc courant est le dernier bloc décodé de la ligne considérée (SEk), lesdits sous-moyens d'initialisation sont activés pour réinitialiser les variables d'état dudit module de décodage entropique.

13. Programme d'ordinateur comportant des instructions pour mettre en œuvre le procédé de décodage selon l'une quelconque des revendications 8 à 11, lorsqu'il est exécuté sur un ordinateur.

14. Support d'enregistrement lisible par un ordinateur sur lequel est enregistré un programme d'ordinateur comprenant des instructions pour l'exécution des étapes du procédé de décodage selon l'une quelconque des revendications 8 à 11, lorsque ledit programme est exécuté par un ordinateur.

ART ANTERIEUR
**Fig. 1**

**Fig. 2A**

Fig. 2B

**Fig. 3A**

**Fig. 3B**

**Fig. 3C**

PS

MB$_1$

MB$_i$

SE1

SE2

SE3

SE4

○ — MT

IE
(ID)

# Fig. 4A

PS

MB$_1$

MB$_i$

SE1

SE2

SE3

SE4

○ — MT

IE
(ID)

# Fig. 4B

F

IDENTIFICATION
F1,F2, ...Fm,...,FL

D1

DECOD. PARALLELE
SE1,SE2,...,SEk,...,SEP

D2

SED1,SED2,...,SEDk,...,SEDP

RECONSTRUCTION IMAGE
DECOD.

D3

ID

D4

# Fig. 5A

Select. Bloc — D21

D22 — 1er bloc image ?

O → Init. [0,1] — D23

N → SELECT. BLOC SUIV. — D29

D241 — DECOD. ENTROP.

D242 — DECOD. PRED.
$MBp_i$

D243 — QUANT. RES.
$MBq_i$

D244 — DEQUANT.
$MBDt_i$

D245 — DCT INV.
$MBDr_i$

D246 — CONSTRUCTION BLOC DECOD.
$MBD_i$

D24

DISPO. BLOC DECOD. OU SYNCHRO. AVANCEMENT BLOCS DECOD.

D30

D31 — 1er bloc SEk ?

O → LECT. PROBA. $SEk_{-1}$ — D32

N → LECT. PROBA. SEk — D33

D25 — j ème bloc-SEk ?

N

O → STOCK. PROBA. — D26

D34 — dernier bloc SEk ?

O → Init. [0,1] — D35

N

D27 — dernier bloc image ?

N

O

D28

**Fig. 5B**

Fig. 6A

Fig. 6B

**Fig. 7A**

**Fig. 7B**

| | Europäisches Patentamt European Patent Office Office européen des brevets | **RAPPORT DE RECHERCHE EUROPEENNE** | **Numéro de la demande** **EP 25 17 4232** |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2010/063184 A1 (MEDIATEK INC [CN]; HUANG YU-WEN [CN]; GUO XUN [CN]) 10 juin 2010 (2010-06-10) * le document en entier * ----- | 1-14 | INV. H04N19/13 H04N19/174 H04N19/176 H04N19/196 H04N19/436 |
| X | DETLEV MARPE ET AL: "Improved CABAC", 15. VCEG MEETING; 58. MPEG MEETING; 04-06 DEC 2001; PATTAYA,TH; (VIDEO CODING EXPERTS GROUP OF ITU-T SG.16),, no. VCEG-O18, 28 novembre 2001 (2001-11-28), pages 1-6, XP030003351, ISSN: 0000-0459 * le document en entier * ----- | 1-14 | |
| X,P | GORDON C ET AL: "Wavefront Parallel Processing for HEVC Encoding and Decoding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F274, 1 juillet 2011 (2011-07-01), XP030009297, * le document en entier * ----- -/-- | 1-14 | **DOMAINES TECHNIQUES RECHERCHES (IPC)** H04N |

Le présent rapport a été établi pour toutes les revendications

| Lieu de la recherche | Date d'achèvement de la recherche | Examinateur |
|---|---|---|
| Munich | 10 novembre 2025 | Lombardi, Giancarlo |

EPO FORM 1503 03.82 (P04C02)

page 1 de 4

Europäisches
Patentamt

European
Patent Office

Office européen
des brevets

# RAPPORT DE RECHERCHE EUROPEENNE

Numéro de la demande

EP 25 17 4232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Y-W HUANG ET AL: "Ordered Entropy Slices for Parallel CODEC", 38. VCEG MEETING; 89. MPEG MEETING; 1-8 JULY 2009; LONDON, UK & GENEVA, CH; (VIDEO CODING EXPERTS GROUP OF ITU-T SG.16),, no. VCEG-AL25, 5 juillet 2009 (2009-07-05), XP030003706, ISSN: 0000-0084 * pages 2-6, alinéa 2.1 - alinéa 2.4; figures 1-3 * ----- | 1-14 | |
| A | WO 2011/042645 A1 (FRANCE TELECOM [FR]; PATEUX STEPHANE [FR]; AMONOU ISABELLE [FR]; CAMMA) 14 avril 2011 (2011-04-14) * ligne 10 - page 24, ligne 12; figures 5a-5c * ----- | 1-14 | |
| A | MARPE D ET AL: "Context-based adaptive binary arithmetic coding in the H.264/AVC video compression standard", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 juillet 2003 (2003-07-01), pages 620-636, XP011099255, ISSN: 1051-8215, DOI: 10.1109/TCSVT.2003.815173 * le document en entier * ----- -/-- | 1-14 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 10 novembre 2025 | Lombardi, Giancarlo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

          .................................................................................

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 25 17 4232

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SZE V ET AL: "Analysis of entropy slice approaches", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D243, 16 janvier 2011 (2011-01-16), XP030008283, * pages 1-2, alinéa 1 - alinéa 2; figures 2,3 * ----- | 1-14 | |
| A | SEGALL (SHARP) A ET AL: "Video coding technology proposal by Sharp", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A105, 22 avril 2010 (2010-04-22), XP030007535, * pages 25-28, alinéa 2.5; figures 12,13 * ----- | 1-14 | |
| A | SZE (MIT) V: "Massively Parallel CABAC", 38. VCEG MEETING; 89. MPEG MEETING; 1-7-2009 - 8-7-2009; LONDON,GENEVA; (VIDEO CODING EXPERTS GROUP OF ITU-T SG.16),, no. VCEG-AL21, 3 juillet 2009 (2009-07-03), XP030003702, * pages 5-6, alinéa 2.2; figures 3-5 * ----- | 1-14 | |
| A | US 2010/322317 A1 (YOSHIMATSU NAOKI [JP] ET AL) 23 décembre 2010 (2010-12-23) * alinéas [0131] - [0134]; figure 2A * ----- -/-- | 1-14 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 10 novembre 2025 | Lombardi, Giancarlo |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.................................................................................
& : membre de la même famille, document correspondant

EPO FORM 1503 03.82 (P04C02)

page 3 de 4

Europäisches
Patentamt

European
Patent Office

Office européen
des brevets

## RAPPORT DE RECHERCHE EUROPEENNE

Numéro de la demande

EP 25 17 4232

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SCHWARZ H ET AL: "CABAC and Slices", 4. JVT MEETING; 22-26 JUL 2002; KLAGENFURT, AUSTRIA; (JOINT VIDEO TEAM OF ISO/IEC MPEG & ITU/T VCEG - ISO/IEC JTC1/SC29/WG11 AND ITU-T SG.16 Q.6), , no. JVT-D020r1 22 juillet 2002 (2002-07-22), pages 1-17, XP002671680, Extrait de l'Internet: URL:http://wftp3.itu.int/av-arch/jvt-site/ 2002_07_Klagenfurt [extrait le 2009-09-22] * le document en entier * ----- | 1-14 | |

DOMAINES TECHNIQUES
RECHERCHES  (IPC)

Le présent rapport a été établi pour toutes les revendications

| Lieu de la recherche | Date d'achèvement de la recherche | Examinateur |
|---|---|---|
| Munich | 10 novembre 2025 | Lombardi, Giancarlo |

CATEGORIE DES DOCUMENTS CITES

X : particulièrement pertinent à lui seul
Y : particulièrement pertinent en combinaison  avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.......................................................................................
& : membre de la même famille, document  correspondant

EPO FORM 1503 03.82 (P04C02)

page 4 de 4

## ANNEXE AU RAPPORT DE RECHERCHE EUROPEENNE
## RELATIF A LA DEMANDE DE BREVET EUROPEEN NO.

EP 25 17 4232

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-11-2025

| Document brevet cité au rapport de recherche | Date de publication | Membre(s) de la famille de brevet(s) | Date de publication |
|---|---|---|---|
| WO 2010063184 A1 | 10-06-2010 | CN 101836454 A | 15-09-2010 |
| | | TW 201023650 A | 16-06-2010 |
| | | US 2013044806 A1 | 21-02-2013 |
| | | WO 2010063184 A1 | 10-06-2010 |
| WO 2011042645 A1 | 14-04-2011 | CN 102648583 A | 22-08-2012 |
| | | EP 2486659 A1 | 15-08-2012 |
| | | US 2012263232 A1 | 18-10-2012 |
| | | WO 2011042645 A1 | 14-04-2011 |
| US 2010322317 A1 | 23-12-2010 | CN 101939994 A | 05-01-2011 |
| | | EP 2357825 A1 | 17-08-2011 |
| | | JP 5341104 B2 | 13-11-2013 |
| | | JP WO2010067505 A1 | 17-05-2012 |
| | | US 2010322317 A1 | 23-12-2010 |
| | | WO 2010067505 A1 | 17-06-2010 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **J. RISSANEN** ; **G. G. LANGDON JR**. Universal modeling and coding. *IEEE Trans. Inform. Theory*, January 1981, vol. IT-27, 12-23

- **THOMAS WIEGAND** ; **GARY J. SULLIVAN** ; **GISLE BJONTEGAARD** ; **AJAY LUTHRA**. Overview of the H.264/AVC Video Coding Standard. *IEEE Transactions on Circuits and Systems for Video Technology*, July 2003, vol. 13 (7), 560-576